# EUROPÄISCHE PATENTSCHRIFT

(11) **EP 3 651 989 B1**
(45) Veröffentlichungstag und Bekanntmachung des Hinweises auf die Patenterteilung: **18.11.2020**
(21) Anmeldenummer: 19702211.4
(22) Anmeldetag: 22.01.2019
(51) Int. Cl.: B32B 37/10, B32B 37/06, B32B 41/00, B30B 15/06

(54) **LAMINIERVORRICHTUNG UND VERFAHREN ZUM LAMINIEREN WENIGSTENS EINES SCHICHTENSTAPELS**
LAMINATING DEVICE AND METHOD FOR LAMINATING AT LEAST ONE LAYER STACK
DISPOSITIF DE LAMINAGE ET PROCÉDÉ DESTINÉ À LAMINER AU MOINS UN EMPILEMENT DE COUCHES

(30) Priorität: 23.01.2018 DE 102018101470
(43) Veröffentlichungstag der Anmeldung: 20.05.2020
(73) Patentinhaber: Robert Bürkle GmbH, 72250 Freudenstadt (DE)
(72) Erfinder: KLAUS, Daniel, 72250 Freudenstadt (DE); RENZ, Wolfgang, 72250 Freudenstadt (DE)
(74) Vertreter: RPK Patentanwälte Reinhardt, Pohlmann und Kaufmann Partnerschaft mbB
(86) Internationale Anmeldenummer: PCT/EP2019/051518
(87) Internationale Veröffentlichungsnummer: WO 2019/145308

(56) Entgegenhaltungen:
- WO-A2-2011/089473
- US-A1- 2009 056 855
- US-A1- 2013 000 816

## Beschreibung

Die vorliegende Erfindung betrifft eine Laminiervorrichtung zum Laminieren mindestens eines Schichtenstapels mittels Druck und/oder Wärme nach dem Oberbegriff des Anspruches 1 sowie ein zugehöriges Verfahren nach dem Oberbegriff des Anspruches 8.

Eine derartige Laminiervorrichtung umfasst als Teil einer Presse ein Unterteil und ein Oberteil, das mit dem Unterteil gasdicht verbindbar ist, um eine öffen- und schließbare, gasdichte Arbeitskammer zur Aufnahme des zu laminierenden Schichtenstapels zu bilden. Innerhalb der Arbeitskammer ist dann ein gegebenenfalls beheizbares Presselement angeordnet, das als bewegbare Heizplatte ausgebildet sein kann, um einerseits eine zum Laminieren notwendige Auflast auf den Schichtenstapel aufzubringen und andererseits die gegebenenfalls zum Aushärten einer Adhäsivstoffschicht erforderliche Wärme einzubringen. Üblicherweise ist zudem das Unterteil der Laminiervorrichtung beheizbar.

Solch eine Laminiervorrichtung wird bevorzugt zum Laminieren von Photovoltaik-Modulen unter Druck und/oder Wärme verwendet, grundsätzlich geht es aber um das Laminieren von im Wesentlichen plattenförmigen Werkstücken mit mindestens einer durch Druck und/oder Wärme aktivierbaren und/oder aufschmelzbare, wie z.B. PVB, und/oder aushärtbaren Klebeschicht, d.h. in der Regel umfasst der Schichtenstapel zumindest ein plattenförmiges Werkstück sowie eine Adhäsivstoffschicht, die gegebenenfalls mit wenigstens einer weiteren Schicht laminiert werden. Bevorzugte Einsatzbereiche sind damit die Herstellung von Glaslaminaten wie Smartglas, Verbundglas, Verbundsicherheitsglas, von Photovoltaik-Modulen im Glas-Folien-Bereich sowie Photovoltaik-Modulen im Glas-Glas-Bereich, d.h. Dünnschicht und organische Module, sowie Glas-Zellen-Glas-Bereich (kristalline Zellen). Unter Smartglas werden dabei insbesondere technische Gläser verstanden, bei denen z.B. durch Anlegung einer Spannung an eine Schicht des Laminats ein Effekt ausgelöst werden kann, wie z.B. ein Verdunkeln einer Glasfläche.

Ein Photovoltaik-Modul, das zunächst als Beispiel erläutert wird, besteht üblicherweise aus einer Solarzellenschicht, die aus mehreren nebeneinander angeordneten Solarzellen und ihrer Verschaltung gebildet ist und die zwischen einer Glasplatte und einer wetterfesten Folie oder zwischen zwei Glasplatten angeordnet ist. Mit wenigstens einer, meist aber mehrerer Lagen aus einem wärmeaktivierbaren Adhäsivstoff, die im Schichtenstapel zwischen der Solarzellenschicht und der Glasplatte und/oder der wetterfesten Folie angeordnet werden, können die einzelnen Schichten eines Photovoltaikmoduls unter Druck- und/oder Wärmeeinwirkung miteinander laminiert werden. Im Ergebnis sind die Solarzellen und ihre elektrisehe Verschaltung nach dem Aushärten bzw. Vernetzen der Adhäsivstoffschicht feuchtigkeitsdicht sowie wetterfest in einem lichtdurchlässigen Schichtenverbund eingekapselt. Eine ähnliche Vorgehensweise gilt jedoch auch für die anderen eingangs angesprochenen Glaslaminate, bei denen verschiedene Schichten zu unterschiedlichen Zwecken miteinander verbunden bzw. laminiert werden.

Im Stand der Technik sind solche Laminiervorrichtungen üblicherweise hydraulische Pressen, die eine untere Hälfte und eine obere Pressenhälfte aufweisen, die relativ zueinander bewegbar sind, um die Presse zu öffnen und zu schließen. Zwischen den Pressenhälften ist im geschlossenen Zustand eine mittels entsprechender Dichtungen gasdicht verschließbare Arbeitskammer vorgesehen, innerhalb der ein oder mehrere Schichtenstapel als Werkstücke laminiert werden. Um nun ein Werkstück bzw. mehrere Werkstücke bzw. ein oder mehrere Schichtenstapel gleichzeitig - der Einfachheit halber wird im Folgenden jeweils nur von einem Werkstück bzw. Schichtenstapel gesprochen - zu laminieren, wird dieses in den Produktraum der Arbeitskammer eingebracht und die Arbeitskammer verschlossen. Sodann wird normalerweise zumindest der Produktraum evakuiert. Spätestens wenn der Produktraum der Arbeitskammer bis zu einem Solldruck evakuiert worden ist, der in der Regel unterhalb von 1 mbar liegt, wird eine darüber liegender Druckkammer belüftet, so dass aufgrund der Druckdifferenz zwischen Druckkammer und Produktraum eine Auflast auf das Werkstück einwirkt. Durch Regeln des Drucks in der Druckkammer wird ein gewünschter Anpressdruck eingestellt, wobei die Druckkammer hierzu zusätzlich mit Druck beaufschlagt werden kann, d.h. es kann beispielsweise auch Druckluft eingeleitet werden.

Wenn im Rahmen dieser Anmeldung insofern von Druck die Rede ist, so handelt es sich dabei, sofern nicht ausdrücklich etwas Anderes angegeben ist, um einen Druck, der ausgehend von Atmosphärendruck zum einen in Richtung Unterdruck bis zum Vakuum gehen kann, andererseits aber auch einen über dem Atmosphärendruck liegenden Überdruck umfassen kann.

Aus der dem Oberbegriff der unabhängigen Ansprüche zugrundeliegenden US 2013/000816 A1 ist eine Laminiervorrichtung bekannt, die drei Druckkammern aufweist, die durch zwei Membranen abtrennbar sind und auch getrennt betrieben werden können. Die Membranen sind in vertikaler Richtung voneinander beabstandet an Einspannstellen festlegbar und die bewegliche Druckplatte ist in der zweiten Druckkammer angeordnet. Die erste und die zweite Membran sind stets an Ort und Stelle vorgesehen.

Die WO 2011/089473 A2 beschreibt bei einer Laminiervorrichtung die Verwendung eines zusätzlichen Zwischenelements zum Schutz der Membran vor beim Laminierungsprozess austretenden Gasen. Dazu wird der Schichtenstapel in einer Vakuumkammer untergebracht, wobei nur diese Vakuumkammer durch Leitungen evakuiert werden kann. Das "cover member" hingegen liegt mit Atmosphärendruck auf der Membran auf. Damit sind dort maximal zwei Druckkammern vorhanden.

Aus der US 2009/056855 A1 ist die Verwendung von Heizelementen in einer Membran einer Laminiervorrichtung bekannt, um dadurch Wärme unmittelbar dem Schichtenstapel zum Laminieren zuführen zu können. Dort wird auch eine Lösung vorgeschlagen, die mit einer Doppelmembran arbeitet, in der dann z.B. auch die Heizmembran eingelagert wird. Dieser Zwischenraum zwischen den Membranen kann evakuiert oder belüftet werden. Damit liegen mehrere Membranen vor, die ggf. an in vertikaler Richtung voneinander beabstandeten Stellen der Maschine fixiert werden, aber grundsätzlich miteinander bewegt werden. Es wird eine Membran verwendet, die bedarfsweise mit Heizelementen versehen wird.

Aus der DE 33 00 622 A1 ist eine Laminiervorrichtung mit zwei membrangetrennten, bedarfsweise betätigbaren Druckkammern bekannt. Eine bewegbare Druckplatte wird dort mechanisch nach unten gedrückt. Dabei wird eine erste obere Druckkammer auch mit Druckluft beaufschlagt, jedoch nur, um den Druck auf die Folie zu erhöhen, nachdem die Druckplatte sich bereits unten befindet. Die Druckbeaufschlagung der ersten oberen Druckkammer dient damit nicht dazu, die Druckplatte nach unten zu drücken.

Aus der DE 10 2015 115 453 A1 ist eine Laminiervorrichtung bekannt, die im Wesentlichen aus einer Kassette besteht, die zumindest das Unterteil, das Oberteil sowie ein Presselement und Mittel zum Einbringen von Prozesswärme umfasst. In dieser Kassette wird zum Laminieren ein Pressvorgang durchgeführt. In der Kassette ist eine bewegliche Heizplatte oder eine Membran oder auch eine Kombination aus beweglicher Heizplatte und Membran vorgesehen. Unterteil und/oder Oberteil können selbst erwärmt werden, um dadurch Prozesswärme einzubringen. Eine derartige Vorrichtung setzt jedoch eine bestimmte Anzahl von derartigen Kassetten zur Herstellung der Werkstücke voraus.

Der Einsatz einer Membran als flexibles, gasdichtes Element teilt die Arbeitskammer in einen zur Aufnahme von mindestens einem Werkstück vorgesehenen, evakuierbaren Produktraum und einen evakuierbaren und/oder druckbeaufschlagbaren Druckraum auf. Aufgrund eines durch unterschiedliche Drücke in Produktraum und Druckraum erzeugten Druckunterschieds kann die Membran gegen das Werkstück gepresst werden, wodurch sie das Werkstück gegen eine Unterseite der Arbeitskammer drückt und hierdurch die zum Laminieren notwendige Auflast auf das Werkstück aufbringt. Durch Regelung der Druckdifferenz kann der Anpressdruck der Membran eingestellt werden.

Derartige Membranpressen sind zum Beispiel auch aus der EP 2 457 728 A1 oder aus der EP 1 894 717 A1 bekannt. Bei der EP 1 894 717 A1 wird dabei ein mehrstufiges Laminierverfahren durchgeführt, indem die Vakuumpresskammer zunächst evakuiert und danach erst das Werkstück heiß gepresst wird. Dies wird dadurch erreicht, dass das Unterteil relativ zum unteren Presstisch anhebbar ist, so dass ein in der Presse befindliches Werkstück bei geschlossener Arbeitskammer zunächst nicht in Anlage an die beheizte Pressplatte kommt. Das Unterteil ist insofern auf dem unteren Presstisch schwimmend gelagert.

Aus der WO 2017/098465 A1 ist eine membranlose Laminiervorrichtung bekannt, die mit einer thermischen Abdeckung versehen ist. Eine bewegliche, beheizbare Druckplatte wird dabei zum membranlosen Laminieren von Photovoltaik-Modulen mit einer Art Kissen bzw. Polster versehen, das lose an der Unterseite der beweglichen Druckplatte angebracht ist und in der Lage ist, Wärme auf ein Werkstück zu übertragen. Durch die thermische Abdeckung soll ein ausgleichender Effekt erreicht werden, es handelt sich also um ein Polster oder ein Kissen. Bei derartigen membranlosen Laminiereinrichtungen werden Druck und Wärme von der Flachpresse selbst in die Werkstücke eingebracht.

Eine membranfreie Laminiervorrichtung ist zum Beispiel auch aus der WO 2013/010531 A2 bekannt, wobei an einer Pressplatte eine umlaufende aufblasbare Dichtung vorgesehen ist. Durch Veränderung des Drucks in der aufblasbaren Dichtung kann der Laminierdruck beeinflusst werden.

Um den Durchsatz der Laminiervorrichtung zu erhöhen, wird in der EP 1 997 614 A2 vorgeschlagen, die Taktzeiten beim Laminieren dadurch zu verkürzen, dass der eigentliche Laminiervorgang in mehrere Schritte aufgeteilt wird, die in jeweils einer von mehreren hintereinander angeordneten Pressen durchgeführt werden.

Aus der WO 2010/143117 A2 sind eine Laminiervorrichtung und ein Laminierverfahren mit mehr als einer separierbaren Druckkammer bekannt, in der eine Vielzahl von Schichten oder ein Schichtenstapel laminiert werden kann. Vergleichbare Lösungen sind aus DE 29 19 285 A1, WO 2011/158147 A1 und WO 94/29106 A1 bekannt)

Grundsätzlich lassen sich die Laminierprozesse neben der Aufteilung in membranfreies und membranbehaftetes Laminieren auch in ein- und mehrstufige Prozesse aufteilen. Bei einem einstufigen Laminierprozess wirken in einer Einheit nacheinander Vakuum, Druck und Temperierung auf das Werkstück ein. Bei einem mehrstufigen Prozess hingegen sind in einer ersten Stufe Druck, Vakuum und Temperierung möglich, während in der wenigstens einen weiteren Stufe Druck und Temperierung ohne Vakuum eingesetzt werden. Damit werden die einzelnen Prozessschritte voneinander getrennt, um die Ausbringung der Maschine zu erhöhen. Der Ausbringtakt halbiert sich, die Ausbringung verdoppelt sich.

Die bekannten Lösungen kommen verfahrenstechnisch ans Ende von möglichen Taktzeitverkürzungen. Werden zur Überwindung dieses Problems mehrstufige Lösungen eingesetzt, ist mehr Platz erforderlich und es fallen deutlich höhere Investitionskosten sowie ein höherer Energiebedarf an.

Zudem erfolgt die Wärmeeinbringung meist nur einseitig von unten in das Werkstück. Dadurch können Eigenspannungen im Werkstück auftreten bzw. dauerhaft eingebracht werden, was die Langzeitstabilität der Werkstücke reduziert und die Ausschussquote erhöht. Dabei wird durch die einseitige Wärmeeinbringung in das Werkstück im Vergleich zur beidseitigen Wärmeeinbringung deutlich weniger Wärme ins Produkt eingebracht. Produktabhängig können sich zudem Nachteile bei der Produktqualität durch den Umsetzvorgang in mehrstufigen Lösungen ergeben, da ein undefinierter Zustand beim Transfer zwischen den einzelnen Stufen vorliegt.

Als weiteres Problem hat sich in der Praxis herausgestellt, dass unterschiedliche Photovoltaik-Module derzeit in einer Presse nicht oder nur bedingt herstellbar sind, d.h. unterschiedliche Betriebsarten sind nicht oder allenfalls nach entsprechenden Umbauten möglich. So werden für die Herstellung von Glas-Folien-Modulen in der Regel Membranen benötigt, da ansonsten die Strings in den Modulen "verschwimmen". Für die Herstellung von Glas-Glas-Modulen werden in der Regel hingegen Flachpressen, also ohne Membran eingesetzt. Bei der Herstellung von Glas-Zelle-Glas-Modulen kann es wiederum bereits durch einen minimalen Parallelitätsunterschied der beiden Heizplatten zueinander zum "Verschwimmen" der Zellen als Zellversatz im Modul kommen.

Ausgehend von diesem Stand der Technik liegt der vorliegenden Erfindung die Aufgabe zugrunde, unterschiedliche Betriebsarten einer Laminiervorrichtung in einer Einheit umzusetzen.

Dies wird mit einer Laminiervorrichtung sowie mit einem Verfahren zum Laminieren wenigstens eines Schichtenstapels gemäß den Merkmalen der Patentansprüche 1 bzw. 8 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.
Wenn dabei im Rahmen der Erfindung von einem flexiblen, gasdichten Element die Rede ist, so kann es sich dabei auch um ein Material für dieses flexible Element handeln, dass nur annähernd oder im Wesentlichen gasdicht ist. Dies gilt insbesondere für das die obere Druckkammer abtrennende flexible Element. Wird dafür keine Silikonmembran verwendet, die in der Regel gasdicht ist, sondern mit FKM beschichtetes Gewebetuch, kann sich eine Leckage ergeben, die allerdings prozesstechnisch unkritisch ist.

Die Laminiervorrichtung weist zum Laminieren wenigstens eines Schichtenstapels, der wenigstens ein im Wesentlichen plattenförmiges Werkstück und wenigstens eine zumindest auch als Adhäsivstoffschicht wirkende Schicht umfasst, mittels Druck und/oder Wärme, insbesondere zu einem Glaslaminat und/der Photovoltaik-Modul, ein Unterteil und ein mit dem Unterteil gasdicht verbindbares Oberteil auf. Zwischen Unterteil und Oberteil ist eine öffen- und schließbare Arbeitskammer zur Aufnahme des Schichtenstapels beim Laminieren ausgebildet. Innerhalb der Arbeitskammer ist zwischen Oberteil und Unterteil eine bewegbare Druckplatte entlang einer Pressachse bewegbar, die bedarfsweise beheizbar ist oder auch beheizt sein kann. In der Arbeitskammer sind mehrere voneinander separierbare, bedarfsweise betätigbare Druckkammern vorgesehen. Zwischen Unterteil und Oberteil ist zudem ein Dichtrahmen angeordnet. In Richtung der Pressachse sind mehrere voneinander beabstandet angeordnete Einspannstellen vorgesehen und dazu bestimmt und geeignet, wenigstens ein vorzugsweise als Membran ausgebildetes flexibles Element an den Einspannstellen zur Abtrennung einer ersten Druckkammer festlegbar anzuordnen, aus der heraus durch Beaufschlagung oder Nichtbeaufschlagung mit Druck oder Unterdruck die bewegbare Druckplatte in der Arbeitskammer bewegbar ist. Das flexible, gasdichte Element teilt die Arbeitskammer in eine oberhalb des flexiblen, gasdichten Elements befindliche erste Drucckammer und eine unterhalb des flexiblen, gasdichten Elements befindliche zweite Drucckammer, in der die bewegbare Druckplatte angeordnet ist, wobei die Bewegung der bewegbaren Druckplatte aufgrund einer Druckdifferenz zwischen den Druckkammern erfolgt.

Die Laminiervorrichtung weist ferner wenigstens einen als vom Unterteil und Oberteil gesonderten Dichtrahmen vorgesehenen Zwischenrahmen auf, wobei die Einspannstellen an oder zwischen diesen Elementen vorgesehen sind. Dabei ist ein erstes flexibles, gasdichtes Element in einem Spalt oberhalb des Zwischenrahmens eingespannt und ein weiteres flexibles Element in einen Spalt unterhalb des Zwischenrahmens als Membran einspannbar. Dadurch ist es zum Einen möglich, zwischen Zwischenrahmen und Oberteil bzw. zwischen Zwischenrahmen und Unterteil entweder noch weitere Rahmen vorzusehen, zumindest aber die bestehenden Zwischenräume bzw. Spalten zu nutzen, um dort - ganz nach Bedarf - flexible, gasdichte Elemente z.B. als Membran oder als Druckkammerbegrenzung einzusetzen. Es können aber auch an diesen Elementen Einspannstellen gebildet werden. Je nach Anzahl der Rahmen ist damit ein Mehr-Druckkammersystem möglich, das jedoch bis auf zwei Kammern, nämlich erste Druckkammer und Produktraum je nach Einsatzzweck reduziert werden kann. Dies bedeutet auch, dass die Membran nicht kontinuierlich vorgesehen sein muss, sondern durch Entnahme der Membran ein Dreikammersystem zu einem Zweikammersystem als Flachpresse in einer Vakuumkammer problemlos umgerüstet werden kann.

Dadurch werden die baulichen Voraussetzungen dafür geschaffen, die Vorrichtung membranfrei einzusetzen und die Wärme im Prozess auch aus der bewegbaren Druckplatte einzubringen, sofern diese beheizbar ausgestaltet ist. Die bewegbare Druckplatte kann unabhängig von der Presse und anderen Elementen der Laminiervorrichtung und unabhängig von einer bedarfsweise zusätzlich einsetzbaren Membran bewegt werden, so dass entsprechend gesteuert bzw. geregelt Druck und Wärme in den Prozess eingebracht werden können. Es ergibt sich damit eine Kombination einer Flachpressenstufe und einer Membranstufe in einer Einheit. So werden unterschiedliche Betriebsarten in einer Einheit möglich, d.h. die Laminiervorrichtung kann als Flachpresse, Membranpresse oder Flach- und Membranpresse betrieben werden.

Ein derartiger Aufbau führt insgesamt zu einer besseren Ausnutzung der Ressourcen, da zunächst durch eine Anlagenverkürzung, da nur noch eine Pressenstufe erforderlich ist, der für die gesamte Anlage erforderliche Platz reduziert werden kann. Gleichzeitig lassen sich die Prozesse schneller durchführen, da alle Prozesse in einer Einheit durchgeführt werden können. Dies trägt wiederum zu einer Verkürzung der Taktzeit, einem geringeren Energiebedarf und einer höheren Qualität der Werkstücke bei. Insbesondere wird die Langzeitstabilität verbessert, da ein Umsetzen der Werkstücke nicht mehr erforderlich ist.

Bei Glas-Folien-Photovoltaik-Modulen wird die Rückseitenfolienschrumpfung eliminiert, da im Falle der Anwendung einer beheizbaren, bewegbaren Druckplatte beide Seiten mit Wärme beaufschlagt werden. Gegenüber einer einstufigen Ausführung kann dann durch die bewegbare Druckplatte als auch vom Unterteil her eine beidseitige Wärmeeinbringung realisiert werden, was insbesondere bei Glas-Glas-Anwendungen von Bedeutung ist. Bei der Betriebsart als Flachpresse treten keine Kantenüberpressungen am Werkstückrand auf, so dass sich weniger Spannungen im Werkstück einstellen.

Grundsätzlich wird es dadurch möglich, in einer Anlage verschiedenste Glaslaminate herzustellen, d.h. die Herstellung von Glas-Folien-, Glas-Glas-, Glas-Zelle-Glas-Modulen in einer Anlage ist möglich. Dabei ergeben sich grundsätzlich immer definierte Prozessparameter und Prozessbedingungen während des gesamten Produktionszyklusses. Dies führt zu einer Kosteneinsparung gegenüber mehrstufigen Ausführungen. Mit dem Bauraum einer einstufigen Ausführung kann die Taktzeit einer mehrstufigen Ausführung erreicht werden.

Gleichzeitig ist die Vorrichtung nicht nur für die Herstellung sämtlicher bekannten Arten von Photovoltaik-Modulen geeignet, sondern auch zur Herstellung von Glaslaminaten aller Art (wie z.B. auch Smartglas), so dass sich flexible Einsatzmöglichkeiten in unterschiedlichsten Anwendungen ergeben. Es handelt sich damit um einen einstufigen Prozess, bei dem unter Hinzufügen einer weiteren Flachpresse bedarfsweise die Taktzeit nochmals verkürzt werden kann. Gleichzeitig ist eine Kombination einer Flach- und einer Vakuum-Membranpresse gegeben. Mehrere Betriebsarten werden möglich, d.h. ein Membranpressen unter Vakuum und Druck, ein Flachpressen unter Druck, kombiniertes Laminieren unter Druck/Vakuum. Dadurch wird eine gezielte Beeinflussung und Steuerung des erforderlichen Prozesses möglich.

Wird ein weiteres flexibles, gasdichtes Element als Membran eingespannt, wird durch die Membran die Arbeitskammer vorzugsweise in eine oberhalb der Membran befindliche zweite Druckkammer, in der die bewegbare Druckplatte vorgesehen ist, und einen unterhalb der Membranplatte befindlichen Produktraum geteilt, der bedarfsweise ebenfalls mit Druck oder Unterdruck beaufschlagbar ist. Dadurch ist es möglich, zum einen die Laminiervorrichtung als Membranpresse zu betreiben, da aber gleichzeitig die Membran entfernbar ist, kann die Vorrichtung ebenso als Flachpresse betrieben werden. Im Ergebnis ergibt sich ein Dreikammersystem mit einer ersten Druckkammer, einer zweiten Druckkammer und dem Produktraum, wobei bei Entfernung der Membran die Trennung der ersten Druckkammer vom Produktraum verbleibt. Die Abtrennung der zweiten Druckkammer durch die Membran führt dann zu dem Dreikammersystem, das unterschiedlichste Einsatzmöglichkeiten der Laminiervorrichtung gestattet. Vorzugsweise erfolgt dabei die Hubbetätigung bzw. die Bewegung der bewegbaren Druckplatte durch Druckdifferenzen innerhalb der einzelnen Kammern. Grundsätzlich können aber auch mehr als drei Kammern vorgesehen werden.

Das Dreikammersystem wird dadurch gewährleistet, dass zwischen Unterteil und Oberteil wenigstens drei durch zwei flexible, gasdichte Elemente, nämlich die Membran und das erste flexible gasdichte Element, voneinander getrennte Druckkammern abgegrenzt werden, nämlich die erste und zweite Druckkammer und der Produktraum.

Es ist von Vorteil, wenn bewegbare Druckplatte und Membran unabhängig voneinander aus den Druckkammern zur Anlage oder Nichtanlage am Unterteil bzw. Schichtenstapel bewegbar sind. Damit können Membran und bewegbare Druckplatte auch unabhängig voneinander den Druck auf das zu laminierende Werkstück aufbringen.

Günstigerweise ist der zwischen Unterteil und Oberteil angeordnete Dichtrahmen mehrteilig und umfasst einen Membranrahmen in Höhe der Membran, einen Zwischenrahmen in Höhe der zweiten Druckkammer und einen oberen Kammerrahmen in Höhe der ersten Drucckammer. Durch die Mehrteiligkeit des Dichtrahmens und die damit zwischen den Rahmen vorgesehenen Spalten können die flexiblen, gasdichten Elemente bedarfsweise eingespannt werden, um die Druckkammern voneinander abzugrenzen. Dies erhöht die Modularität und die gewünschte Flexibilität an Einsatzmöglichkeiten.

Vorteilhafterweise ist die bewegbare Druckplatte über wenigstens ein vorzugsweise elastisches Rückstellmittel wie z.B. eine Federsäule gewichtkompensiert am Oberteil gelagert und damit gegen den oberen Presstisch vorgespannt. Aus dieser gewichtskompensierten Lage heraus kann durch Druckdifferenzen in den Druckkammern die bewegbare Druckplatte in ihrer Bewegung energieeffizient gesteuert werden.

Die Aufgabe wird auch durch ein Verfahren zum Laminieren wenigstens eines Schichtenstapels gelöst, wobei der wenigstens eine Schichtenstapel in eine öffen- und schließbare Arbeitskammer eingebracht wird, die zwischen Unterteil und Oberteil der Laminiervorrichtung ausgebildet ist und im geschlossenen Zustand beim Laminieren mittels eines zwischen Unterteil und Oberteil angeordneten Dichtrahmens gasdicht verschließbar ist. Die bewegbare Druckplatte ist innerhalb der Arbeitskammer bedarfsweise zwischen Oberteil und Unterteil bzw. Schichtenstapel entlang der Pressachse der Laminiervorrichtung bewegbar. Die Bewegung der in der Arbeitskammer angeordneten Elemente der Laminiervorrichtung erfolgt aus in der Arbeitskammer vorgesehenen, betätigbaren Druckkammern, durch deren Beaufschlagen oder Nichtbeaufschlagen mit Druck oder Unterdruck, d.h. im Ergebnis gegebenenfalls auch durch die zwischen diesen Druckkammern und dem Produktraum vorhandene Druckdifferenz. Die bewegbare Druckplatte wird aus einer ersten Druckkammer durch deren Beaufschlagung oder Nichtbeaufschlagung mit Druck in der Arbeitskammer bewegt, die durch ein quer zur Pressachse angeordnetes, flexibles, gasdichtes Element von der Arbeitskammer abgetrennt wird, das an einer von mehreren entlang der Pressachse voneinander beabstandeten Einspannstellen festgelegt wird oder festlegbar ist. Die Arbeitskammer wird durch das flexible, gasdichte Element und zwar insbesondere durch das erste flexible, gasdichte Element in eine oberhalb des flexiblen, gasdichten Elements befindliche erste Druckkammer und eine unterhalb des flexiblen, gasdichten Elements befindliche zweite Druckkammer geteilt, in welcher die bewegbare Druckplatte bewegbar ist, wobei die Bewegung der Druckplatte aufgrund einer Druckdifferenz zwischen den Druckkammern erfolgt. Ein erstes gasdichtes Element wird in einen Spalt oberhalb eines ein Teil des Dichtrahmens bildenden Zwischenrahmens eingespannt und ein weiteres flexibles Element ist in einen Spalt unterhalb dieses Zwischenrahmens als Membran einspannbar. Durch diese Anordnung wird es möglich, die bewegbare Druckplatte gesondert anzusteuern. Damit werden auch die baulichen Voraussetzungen dafür geschaffen, die Laminiervorrichtung zu einer Membranpresse umzubauen, und dadurch den Betrieb der Laminiervorrichtung als Flachpresse, Membranpresse oder als Kombination von Flach- und Membranpresse bzw. Membran- und Flachpresse zu betreiben. Durch das eingespannte erste flexible gasdichte Element wird eine erste Druckkammer geschaffen, der die Betätigung der bewegbaren Druckplatte gestattet. Durch die Membran kann zudem nochmals eine Abkopplung von bewegbarer Druckplatte und Membran erfolgen, so dass diese grundsätzlich unabhängig voneinander betätigt werden können.

Bevorzugterweise wird die Arbeitskammer durch das flexible gasdichte Element und zwar insbesondere durch das erste flexible, gasdichte Element in eine oberhalb des flexiblen gasdichten Elements befindliche erste Druckkammer und eine unterhalb des flexiblen gasdichten Elements befindliche zweite Druckkammer geteilt, in welcher die bewegbare Druckplatte bewegt wird. Diese zweite Druckkammer kann zugleich auch bereits der Produktraum sein, insbesondere wenn keine gesonderte Membran verwendet wird. Durch die Abgrenzung der ersten Druckkammer von dem "Bewegungsraum" für die bewegbare Druckplatte werden ein unabhängiger Betrieb und eine Betätigung der bewegbaren Druckplatte unabhängig von anderen Teilen im Arbeitsraum grundsätzlich ermöglicht.

Günstigerweise wird dann, wenn als weiteres flexibles Element eine Membran eingespannt wird, die Membran so eingespannt, dass sie die Arbeitskammer in eine oberhalb der Membran befindliche zweite Druckkammer, in der die bewegbare Druckplatte bewegt wird, und eine unterhalb der Membran befindlichen Produktraum geteilt, der bedarfsweise ebenfalls mit Druck beaufschlagt werden kann. Dadurch wird ein Dreikammersystem geschaffen, aus dem heraus insbesondere bewegbare Druckplatte und Membran unabhängig voneinander und bedarfsweise auch gemeinsam betätigt werden können. Dies erlaubt einen vielseitigen Anwendungsbereich der Vorrichtung, ganz nach Bedarf und auf den jeweiligen Einsatzzweck bzw. das zu erzeugende Laminat zugeschnitten.

Vorteilhafterweise umfasst das Verfahren die Schritte
- Einbringen eines Schichtenstapels in die Arbeitskammer,
- gleichzeitiges Evakuieren der ersten Druckkammer, der zweiten Druckkammer und des Produktraums,
- Belüften der ersten Druckkammer, wobei die bewegbare Druckplatte mit der Membran auf den Schichtenstapel abgelegt wird,
- Aufbau von Druck auf den Schichtenstapel,
- Belüften der Druckkammern und des Produktraums zur Entnahme des laminierten Schichtenstapels.
Bei einem derartigen Betrieb kann die Vorrichtung als Flachpresse mit Membran betrieben werden, wobei sich die bewegliche Druckplatte zusammen mit der Membran auf das darunterliegende Werkstück ablegt. Dabei kann in der ersten Druckkammer bedarfsweise zusätzlich einen Druck oberhalb des atmosphärischen Umgebungsdruckes, d.h. ein Überdruck aufgebracht werden, um den Druck bedarfsweise weiter zu erhöhen.

Ebenso ist es von Vorteil, dass dann, wenn keine Membran vorhanden ist, dass Verfahren die Schritte aufweist:
- Einbringen eines Schichtenstapels in die Arbeitskammer,
- Evakuieren der ersten Druckkammer sowie des Produktraums,
- Belüften der ersten Druckkammer und Ablegen der bewegbaren Druckplatte auf dem Schichtenstapel,
- Aufbau von Druck auf den Schichtenstapel,
- Belüften des Produktraums und Entnehmen des laminierten Schichtenstapels.
Bei dieser Betriebsart handelt es sich um ein Flachpressen ohne Membran, also ein membranloses Verfahren, das aber in derselben Vorrichtung betrieben werden kann. Hierbei legt sich lediglich die bewegbare Druckplatte auf das Werkstück ab und wie zuvor kann auch hier in der ersten Druckkamme ein Druck oberhalb des Atmosphärendrucks aufgebracht werden.

Nach einer weiteren Betriebsart umfasst das Verfahren günstigerweise die Schritte:
- Einbringen eines Schichtenstapels in die Arbeitskammer,
- Evakuieren der ersten Druckkammer, der zweiten Druckkammer und des Produktraums,
- Belüften der zweiten Druckkammer und Ablegen der Membran, ohne dass die bewegbare Druckplatte Kontakt mit der Membran hat,
- Belüften der ersten Druckkammer und des Produktraums und Entnehmen des laminierten Schichtenstapels.
Diese Betriebsart ist als Membranpressen bekannt und auch dieses Verfahren kann mit derselben Vorrichtung betrieben werden. Hier steht die zweite Druckkammer im Vordergrund, da durch Belüftung dieser Kammer die Membran sich ohne bewegbare Druckplatte auf das Werkstück ablegt. In diesem Fall kann in der zweiten Druckkammer zusätzlich ein Überdruck über dem Atmosphärendruck hinaus erzeugt werden.

Vorteilhafterweise kann auch eine weitere Betriebsart eingesetzt werden, die als eine Kombination von Membran und Flachpressen anzusehen ist. Ein derartiges Verfahren umfasst die Schritte:
- Einbringen eines Schichtenstapels in die Arbeitskammer,
- Evakuieren der ersten Druckkammer, der zweiten Druckkammer und des Produktraums,
- Belüften der zweiten Druckkammer und Ablegen der Membran auf dem Schichtenstapel,
- Belüften der ersten Druckkammer und Ablegen der bewegbaren Druckplatte auf der Membran und dem darunter liegenden Schichtenstapel, wobei der Druck in der ersten Druckkammer größer als der Druck in der zweiten Druckkammer ist,
- Belüften der Druckkammern und des Produktraums zur Entnahme des laminierten Schichtenstapels.
Dabei wird zunächst durch Belüften der zweiten Druckkammer die Membran auf das Werkstück abgelegt, wobei bedarfsweise in der zweiten Druckkammer ein Überdruck oberhalb des Atmosphärendrucks aufgebracht werden kann. Die bewegbare Druckplatte bleibt währenddessen oberhalb der Membran und hat keinen Kontakt zum Produkt. Wird jedoch dann die erste Druckkammer belüftet, senkt sich die bewegbare Druckplatte auf die Membran und das darunterliegende Werkstück ab. Dazu muss allerdings der Druck in der ersten Drucckammer höher sein, als in der zweiten Druckkammer. All dies kann ebenfalls mit derselben Vorrichtung erfolgen.

Als weitere Betriebsart ist günstigerweise ein Betrieb als Flach- und Membranpresse in Kombination möglich. Das Verfahren weist dabei die Schritte auf
- Einbringen eines Schichtenstapels in die Arbeitskammer,
- Evakuieren der ersten Druckkammer, der zweiten Druckkammer und des Produktraums,
- Belüften der ersten Druckkammer und Ablegen der bewegbaren Druckplatte und der Membran gemeinsam auf dem Schichtenstapel,
- Belüften der zweiten Druckkammer und Bewegen der bewegbaren Druckplatte weg von der Membran,
- bedarfsweise wenigstens ein weiteres Mal Absenken der bewegbaren Druckplatte auf den Schichtenstapel und die Membran und anschließendes Anheben der bewegbaren Druckplatte,
- Belüften der Druckkammern und des Produktraums zur Entnahme des Schichtenstapels. Hierbei werden zunächst die bewegbare Druckplatte und die Membran gemeinsam auf das Werkstück gelegt, wobei zunächst nur der Flächendruck der bewegbaren Druckplatte aus der resultierenden Druckdifferenz aus Prozessvakuum im Produktraum und dem Belüftungsdruck in der ersten Druckkammer wirkt. Die Membran selbst wirkt dabei noch nicht mit, da die zweite Druckkammer noch evakuiert ist, so dass die Membran zunächst nur als Polster wirkt. Wird jedoch die zweite Druckkammer anschließend belüftet, erfolgt ein Membranpressen mit dem Membrandruck. Bei belüfteter zweiter Druckkammer wird die bewegbare Druckplatte bei Verwendung einer Gewichtskompensation z.B. durch die Federsäule wieder nach oben gespannt, bzw. kann mit Hilfe eines leichten Überdrucks unter Überwindung der Rückzugskräfte der Federsäule auf die Membran abgelegt werden und damit Temperatur in das Werkstück einführen. Dies kann auch mehrmals nacheinander erfolgen. Durch Erhöhung des Überdrucks in der ersten Druckkammer kann zusätzlich ein Druck wie beim Flachpressen aufgebracht werden.

Als weitere Betriebsart hat sich ein Verfahren herausgestellt, das insbesondere für die Anwendung zum Laminieren von Smartglas oder Glaslaminaten z.B. mit PVB oder anderen Klebefolien geeignet ist. Das Verfahren weist dabei die Schritte auf
- Einbringen eines Schichtenstapels in die Arbeitskammer,
- Aufbringen eines Drucks, der größer als Atmosphärendruck ist, in der ersten Druckkammer,
- Ablegen der bewegbaren Druckplatte und, falls vorhanden, der Membran, auf dem Schichtenstapel,
- Einbringen von Wärme, insbesondere derselben Wärmemenge, von der bewegbaren Druckplatte und vom Unterteil in den Schichtenstapel,
- Absenken des Drucks in der ersten Druckkammer und Abheben der bewegbaren Druckplatte,
- Betreiben der Vorrichtung als Flach- und/oder Membranpresse,
- Entnehmen des laminierten Schichtenstapels.
Anders als in den vorausgegangenen Verfahren wird in diesem Anwendungsfall nicht mit Vakuum zumindest in der ersten Druckkammer 18 gestartet, sondern mit Druck. Der Produktraum 20 kann, muss aber dazu nicht evakuiert werden. Gleichzeitig kann ein gleichmäßiger Wärmeeintrag in die Adhäsivstoffschicht und/oder Flüssigkristallschicht eingebracht werden, was sowohl Qualität als auch Ausbringrate steigert.

Deutlich wird, dass damit sechs verschiedene Betriebsarten grundsätzlich in ein und derselben Vorrichtung möglich sind. Zudem ist es grundsätzlich möglich, in der ersten Druckkammer und/oder zweiten Druckkammer je nach Bedarf einen Druck aufzubauen, der höher als der Atmosphärendruck ist, was die Einsatzmöglichkeiten weiter erhöht.

Günstigerweise ist neben den bereits fünf benannten Betriebsarten bei jeder Betriebsart die Möglichkeit gegeben, anstelle des Evakuierens des Produktraums den Druck im Produktraum selbst nicht, insbesondere nicht unter Atmosphärendruck abzusenken, so dass auch dadurch nochmals weitere Einsatzmöglichkeiten geschaffen werden.

Weitere Vorteile ergeben sich aus den Unteransprüchen und der nachfolgenden Beschreibung bevorzugter Ausführungsbeispiele.

Im Folgenden wird die Erfindung anhand von in den beigefügten Figuren dargestellte Ausführungsbeispiele näher erläutert. Es zeigen:
- Fig. 1: einen schematischen Schnitt durch den Arbeitsraum einer Laminiervorrichtung einschließlich Federsäule bei abgehobener Pressplatte mit einem im Arbeitsraum befindlichen Werkstück,
- Fig. 2: einen Schnitt durch die Laminiervorrichtung gemäß dem rechten Teil von Fig. 1 bei der Betriebsart Membranpressen,
- Fig. 3: eine Darstellung gemäß Fig. 2 bei der Betriebsart Flach- und Membranpressen,
- Fig. 4, 5: eine Darstellung gemäß Fig. 2 bei der Betriebsart Flachpressen ohne Membran mit angehobener und abgesenkter Druckplatte.

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

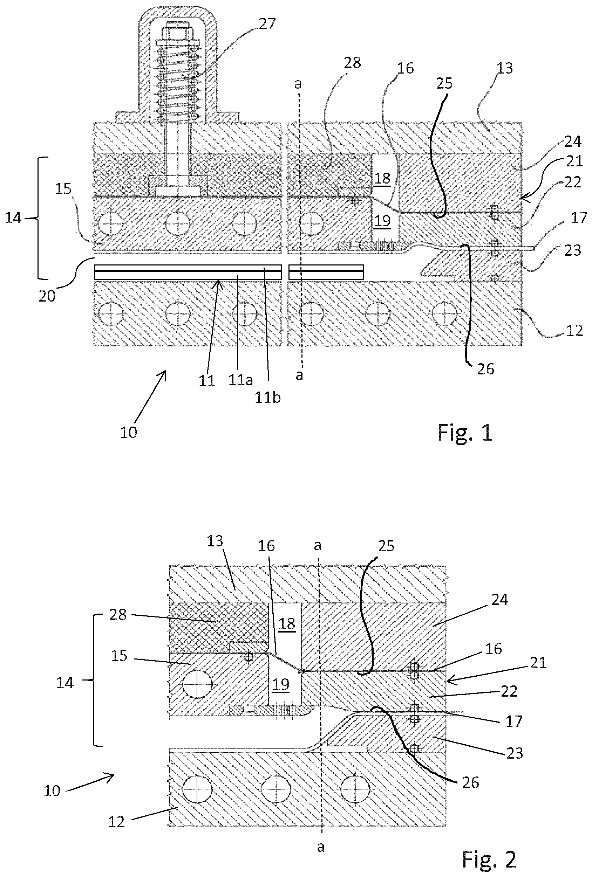

Die Figuren zeigen einen Schnitt durch eine Laminiervorrichtung 10 zum Laminieren wenigstens eines Schichtenstapels 11, der gemäß Fig. 1 wenigstens ein im Wesentlichen plattenförmiges Werkstück 11a und wenigstens eine Adhäsivstoffschicht 11b umfasst. Als Adhäsivstoffschicht wird dabei auch eine Schicht verstanden, die außer dem Adhäsiveffekt auch noch andere Wirkungen hat, wie dies z.B. bei technischen Gläsern wie Smartglas der Fall sein kann.

Das Laminieren erfolgt mit Druck und/oder Wärme, wobei insbesondere ein Glaslaminat und/oder Photovoltaik-Modul durch Laminieren hergestellt wird. Die in den Figuren dargestellte Vorrichtung ist eine Flachpresse und/oder eine Membranpresse bzw. ein Laminator zum Pressen derartiger Laminate, wobei in den Figuren lediglich ein schematischer Schnitt durch den Arbeitsraum 14 der Vorrichtung dargestellt ist. Ergänzend ist in Figur 1 noch als ein vorzugsweise elastisches Rückstellmittel eine Federsäule 27 gezeigt, mittels der die bewegbare Arbeitsplatte 15 gegen das Oberteil 13 der Presse vorgespannt ist. Diese Federsäule 27 dient der Gewichtskompensation der bewegbaren Druckplatte 15. Grundsätzlich sind dem Fachmann zur Gewichtskompensation aber auch andere Bauelemente bekannt, wie z.B. hydraulische, pneumatische oder mechanische Rückstellmittel. Alle weiteren Teile, die dem Fachmann insbesondere im Bereich der Herstellung von Pressen bekannt sind und die keine Bedeutung für die Erfindung haben, wurden weggelassen. Ergänzend ist in den Figuren nur jeweils der rechte Teil des Arbeitsraums 14 dargestellt, es versteht sich jedoch, dass sich der Arbeitsraum 14 in den Figuren nach links erweitert und dort eine entsprechende Ausbildung spiegelverkehrt aufweist.

Die bevorzugte Anwendung der Laminiervorrichtung erfolgt - jedoch ohne Einschränkung hierauf - für die Herstellung von Glaslaminaten, wie Smartglas, Verbundglas oder Verbundsicherheitsglas, Photovoltaik-Module im Glas-Folien-Bereich sowie Photovoltaik-Module im Glas-Glas-Bereich (Dünnschicht und organische Module) und Glas-Zellen-Glas-Bereich (kristalline Zellen). Unter Smartglas werden dabei technische Gläser verstanden, bei denen z.B. durch Anlegung einer Spannung an eine Schicht des Laminats ein Effekt ausgelöst werden kann, wie z.B. ein Verdunkeln einer Fläche. Weitere Einsatzbereiche zum Laminieren auch anderer Materialien sind jedoch grundsätzlich ebenso möglich.

Grundsätzlich können auch mehrere plattenförmige Werkstücke im Arbeitsraum bearbeitet werden und ebenso ist es möglich, das zusätzliche Schichten und/oder Werkstücke übereinander im Arbeitsraum miteinander laminiert werden.

Im Folgenden wird der grundsätzliche Aufbau der Laminiervorrichtung anhand der Fig. 1 erläutert. Die Laminiervorrichtung weist ein Unterteil 12 und ein mit dem Unterteil 12 gasdicht verbindbares Oberteil 13 auf, die im Ausführungsbeispiel durch die entsprechenden Teile der Presse bzw. des Pressentisches dargestellt sind. Zwischen diesen Teilen der Presse, also zwischen Unterteil 12 und Oberteil 13 ist eine öffenbare und schließbare Arbeitskammer 14 zur Aufnahme des Schichtenstapels 11 beim Laminieren vorgesehen. Im Arbeitsraum 14 sind auch weitere Bauteile angeordnet, wie insbesondere die bewegbare Druckplatte 15 oder, falls erforderlich, die Isolierschicht 28 zur Isolierung gegenüber dem Oberteil 13. In Fig. 1 ist erkennbar, dass die Lagerung der bewegbaren Druckplatte die Isolierschicht 28 und das Oberteil 13 durchgreift, damit dort die Lagerung an der Federsäule 27 als einem elastischen Rückstellmittel erfolgen kann.

Die bewegbare Druckplatte 15 ist innerhalb der Arbeitskammer 14 zwischen Oberteil 13 und Unterteil 12 bzw. Schichtenstapel 11 entlang einer Pressachse a-a bewegbar. Die Druckplatte 15 kann beheizt oder beheizbar sein, muss es aber nicht. Die Pressachse definiert dabei die Schließ- und Öffenrichtung der Presse. Zudem ist in Fig. 1 auf der rechten Seite zwischen Unterteil 12 und Oberteil 13 ein Dichtrahmen 21 angeordnet, der erfindungsgemäß mehrteilig ausgebildet ist. In der Arbeitskammer 14 sind ferner mehrere voneinander separierbare, bedarfsweise mit Druck oder Unterdruck beaufschlagbare Druckkammern vorgesehen.

Wenigstens ein flexibles Element, nämlich im Ausführungsbeispiel entweder das erste flexible Element 16 und/oder das weitere flexible, gasdichte Element 17, ist zwischen den Teilen des mehrteiligen Dichtrahmens 21 zur Abtrennung einer ersten Druckkammer 18 festgelegt bzw. eingespannt oder festlegbar bzw. einspannbar, wobei durch Beaufschlagung oder Nichtbeaufschlagung dieser ersten Druckkammer 18 mit Druck oder Unterdruck die bewegbare Druckplatte 15 bewegbar ist. Wenigstens ein Zwischenrahmen 22 ist als vom Unterteil 12 und Oberteil 13 gesonderter Dichtrahmen vorgesehen. Zwischen dem Zwischenrahmen und dem Unterteil 12 bzw. Oberteil 13 ist jeweils wenigstens ein Spalt 25, 26 vorgesehen. Dabei ist ein erstes flexibles gasdichtes Element 16 in den Spalt 25 oberhalb des Zwischenrahmens 22 eingespannt. Ein weiteres flexibles Element ist in dem Spalt 26 unterhalb des Zwischenrahmens 22 als Membran einspannbar, die zum Membranpressen verwendet werden kann. Einspannbar bedeutet, dass die Membran 17 nicht eingespannt sein muss, sondern ein Betrieb auch ohne Membran 17 möglich ist, worauf weiter unten noch näher eingegangen wird. Gleichwohl ist die Vorrichtung für das bedarfsweise Einspannen der Membran 17 vorbereitet.

Wenn dabei von einem flexiblen, gasdichten Element die Rede ist, so kann es sich dabei auch um ein Material für dieses flexible Element handeln, dass nur annähernd oder im Wesentlichen gasdicht ist. Dies gilt insbesondere für das die obere Druckkammer abtrennende flexible Element 16. Wird dafür keine Silikonmembran verwendet, die in der Regel gasdicht ist, sondern mit FKM beschichtetes Gewebetuch, kann sich eine Leckage ergeben, die allerdings prozesstechnisch unkritisch ist. Das weitere flexible Element, die Membran 17, kann in der Regel gasdicht ausgebildet werden.

Das wenigstens eine flexible, gasdichte Element teilt damit die Arbeitskammer in unterschiedliche Bereiche ein. Im Ausführungsbeispiel teilt das erste flexible, gasdichte Element die Arbeitskammer 14 in eine oberhalb dieses Elements befindliche erste Druckkammer 18 und eine unterhalb dieses Elements befindliche zweite Druckkammer 19, in der die bewegbare Druckplatte 15 vorgesehen ist. Damit wird die erste Druckkammer 18 von einem Bewegungsraum für die bewegbare Druckplatte 15 getrennt. Ist zudem ein weiteres flexibles, gasdichtes Element als Membran 17 eingespannt, teilt diese Membran 17 die Arbeitskammer 14 in eine oberhalb der Membran 17 befindliche zweite Druckkammer 19 (s.o.), in der die bewegbare Druckplatte 15 mit ihrem Bewegungsraum vorgesehen ist, und einen unterhalb der Membran 17 befindlichen Produktraum 20 auf, in dem der Schichtenstapel 11 bzw. das Werkstück aufgenommen ist. Auch der Produktraum 20 kann bedarfsweise mit Druck oder Unterdruck beaufschlagt werden.

Wenn im Folgenden von Schichtenstapel oder Werkstück die Rede ist, versteht es sich, dass mehr als ein Werkstück oder mehr als ein Schichtenstapel 11 darunter zu verstehen ist.

Im Ausführungsbeispiel der Fig. 1 sind zwischen Unterteil 12 und Oberteil 13 wenigstens drei durch zwei flexible, gasdichte Element voneinander getrennte Druckkammern vorgesehen, nämlich die erste Druckkammer 18, die zweite Druckkammer 19 und der Produktraum 20.

Vorteilhafterweise sind bewegbare Druckplatte 15 und Membran 17 unabhängig voneinander aus den Druckkammern zur Anlage oder Nichtanlage am Unterteil 12 bzw. Schichtenstapel 11 bewegbar. Damit können verschiedenste Betriebsarten mit ein und derselben Laminiervorrichtung bewerkstelligt werden.

Zwischen Unterteil 12 und Oberteil 13 sind als Teile des Dichtrahmens 21 ein Membranrahmen 23 in Höhe der Membran 17, ein Zwischenrahmen 22 in Höhe des zweiten Druckkammer 19 und ein oberer Kammerrahmen 24 in Höhe der ersten Druckkammer 18 vorgesehen.

Ein derartiger Aufbau gestattet einen schnellen Umbau, insbesondere wenn die Membran 17 bedarfsweise verwendet wird oder auch nicht.

Die bewegbare Druckplatte 15 ist über die Federsäule 27 gemäß Fig. 1 gewichtskompensiert am Oberteil 13 gelagert, welches Oberteil zugleich das bewegliche Oberteil einer Presse ist. Grundsätzlich sin aber auch andere Rückstellmittel denkbar, die dem Fachmann zur Gewichtskompensation bekannt sind, wie insbesondere hydraulische oder pneumatische oder auch mechanische Komponenten. Ein umgekehrter Aufbau, bei dem das Unterteil bewegbar ist, oder ein Aufbau bei dem Unterteil und Oberteil bewegbar sind, ist grundsätzlich ebenso denkbar.

Verfahrensgemäß kann mit der Vorrichtung wenigstens ein Schichtenstapel 11 laminiert werden. Ein derartiger Schichtenstapel 11 umfasst vorzugsweise wenigstens ein im Wesentlichen plattenförmiges Werkstück 11a und wenigstens eine Adhäsivstoffschicht 11b. Grundsätzlich sind auch weitere Schichten und weitere Werkstücke nebeneinander oder übereinander im Arbeitsraum aufnehmbar. Das Laminieren erfolgt mittels Druck und/oder Wärme, wozu mittels der bewegbaren Druckplatte 15 bzw. der Presse Druck aufgebracht werden kann und/oder von der bedarfsweise beheizbaren bewegbaren Druckplatte bzw. vom Unterteil 12 Wärme in die Arbeitskammer 14 und damit ins Werkstück eingetragen werden kann, um z.B. eine Adhäsivstoffschicht zu aktivieren bzw. auszuhärten.

Beim Laminieren wird der wenigstens eine Schichtenstapel 11 in eine öffenbare und schließbare Arbeitskammer 14 eingebracht, die zwischen dem Unterteil 12 und dem Oberteil 13 der Laminiervorrichtung 10 ausgebildet ist. Diese Arbeitskammer 14 ist im geschlossenen Zustand beim Laminieren mittels eines zwischen Unterteil 12 und Oberteil 13 angeordneten Dichtrahmens 21 gasdicht verschließbar. Die bewegbare Druckplatte 15 ist innerhalb der Arbeitskammer 14 bedarfsweise zwischen Oberteil 13 und Unterteil 12 bzw. Schichtenstapel 11 entlang einer Pressachse a-a der Laminiervorrichtung bewegbar.

Die Bewegung der in der Arbeitskammer 14 angeordneten Elemente der Laminiervorrichtung und insbesondere der bewegbaren Druckplatte 15 erfolgt aus in der Arbeitskammer 14 vorgesehenen, betätigbaren Druckkammern durch deren Beaufschlagung oder Nichtbeaufschlagung mit Druck oder Unterdruck. Die Bewegung der bewegbaren Druckplatte 15 erfolgt dabei insbesondere aufgrund einer Druckdifferenz zwischen den Druckkammern, also im Ausführungsbeispiel zwischen der ersten Druckkammer 18 und/oder der zweiten Drucckammer 19 und/oder dem Produktraum 20.

Die bewegbare Druckplatte 15 wird aus der ersten Druckkammer 18 durch deren Beaufschlagung oder Nichtbeaufschlagung mit Druck in der Arbeitskammer 14 bewegt. Die erste Druckkammer 18 wird durch ein quer zur Pressachse a-a angeordnetes, von dem mehrteiligen Dichtrahmen 21 gehaltenes, flexibles, gasdichtes Element von der Arbeitskammer 14 abgetrennt, so dass die bewegbare Druckplatte 15 beliebig innerhalb der Arbeitskammer 14 aufgrund der genannten Druckdifferenzen bewegt werden kann. Diese Bewegung kann zusammen mit einer Membran 17, unabhängig von einer Membran oder auch ohne Membran 17 erfolgen.

Vorzugsweise sind mehrere flexible, gasdichte Elemente vorgesehen, wobei in einem ersten Ausführungsbeispiel ein erstes flexibles, gasdichtes Element 16 in einen Spalt 25 oberhalb eines ein Teil des Dichtrahmens 21 bildenden Zwischenrahmens 22 gemäß Fig. 1 eingespannt wird und ein weiteres flexibles Element in einen Spalt 26 unterhalb des Zwischenrahmens 22 als für die Membranpresse erforderliche Membran 17 je nach Einsatzzweck einspannbar ist.

Durch das flexible, gasdichte Element und zwar insbesondere durch das erste flexible, gasdichte Element 16 wird die Arbeitskammer 14 in eine oberhalb des flexiblen, gasdichten Elements befindliche erste Druckkammer 18 und eine unterhalb des flexiblen gasdichten Elements befindliche zweite Druckkammer 19 geteilt, in welcher die bewegbare Druckplatte 15 vorgesehen und dort auch bewegt wird. Dies ist z.B. deutlich in der Ansicht der Fig. 2 zu erkennen.

Wird ein weiteres flexibles Element als Membran 17 eingespannt, so teilt auch diese Membran 17 diese Arbeitskammer 14 auf. In diesem Fall ergibt sich oberhalb der Membran 17 eine zweite Druckkammer 19, in der die bewegbare Druckplatte bewegt wird, und ein unterhalb der Membran 17 befindlicher Produktraum 20, der bedarfsweise ebenfalls mit Druck beaufschlagbar wird. Der Produktraum 20 ist gemäß Fig. 1 für die Aufnahme des Werkstücks oder Schichtenstapels 11 bestimmt.

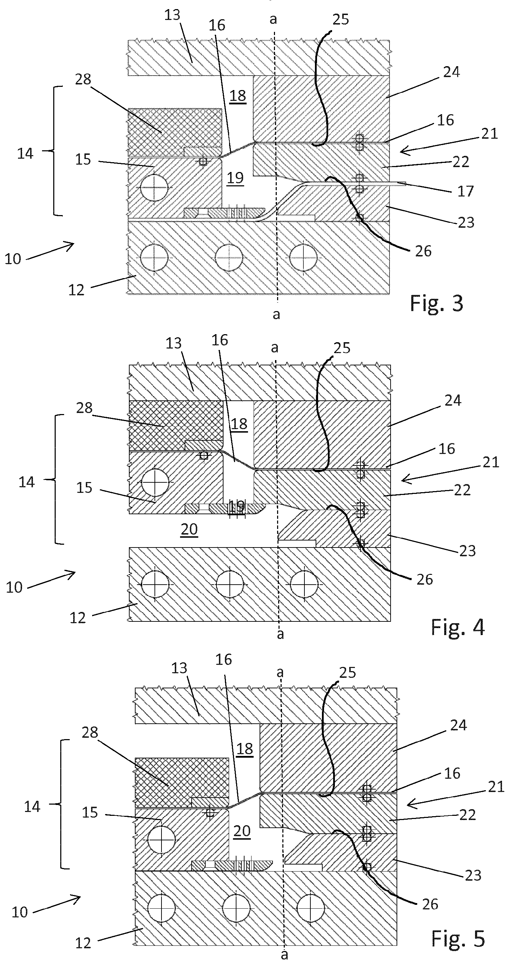

Fig. 2 zeigt den Einsatz der Laminiervorrichtung als Flachpresse mit Membran. Während der Evakuierphase des Produktraumes 20 werden gleichzeitig die Druckkammern 18 und 19 evakuiert. In dieser Phase bleibt die bewegbare Druckplatte in ihrer oberen Stellung gemäß Fig. 1. Um Druck aufzubauen, wird nun die erste Druckkammer belüftet, wobei sich die bewegbare Druckplatte 15 zusammen mit der Membran 17 gemäß Fig. 3 auf den Schichtenstapel ablegt. Jetzt beginnt die Druckphase auf das Werkstück. Ergänzend kann in der ersten Druckkammer 18 zusätzlich ein Druck oberhalb des Atmosphärendrucks aufgebracht werden. Anschließend werden die Druckkammern und der Produktraum 20 belüftet und der laminierte Schichtenstapel kann aus dem Produktraum 20 entnommen werden.

Grundsätzlich ist auch ein Flachpressen ohne Membran möglich. Hierzu muss die Membran 17 aus dem Spalt 26 zwischen Membranrahmen 23 und Zwischenrahmen 22 entnommen werden, so dass sich eine Ansicht gemäß den Fig. 4, 5 ergibt. Damit verbleiben lediglich zwei Räume in der Arbeitskammer, nämlich die untere Kammer, die den Produktraum 20 umfasst und in der auch die bewegbare Druckplatte 15 angeordnet ist, sowie die erste Druckkammer 18. Zu Beginn werden beide Druckkammern evakuiert, wobei die bewegbare Druckplatte 15 in ihrer oberen Stellung verbleibt (Fig. 4). Wird anschließend die erste Drucckammer 18 belüftet, senkt sich die bewegbare Druckplatte 15 auf das Werkstück bzw. den Schichtenstapel 11 ab (Fig. 5). Damit beginnt die Druckphase, wobei bedarfsweise grundsätzlich ein Druck oberhalb Atmosphärendrucks in der ersten Druckkammer 18 aufgebracht werden kann. Anschließend wird der Produktraum 20 belüftet und der laminierte Schichtenstapel 11 entnommen.

Fig. 2 zeigt die Antriebsart Membranpressen. Bei dieser Betriebsart wird nach Einbringen des Schichtenstapels 11 in die Arbeitskammer 14 der Produktraum 20, aber auch die erste Druckkammer 18 und die zweite Druckkammer 19 evakuiert. Anschließend wird jetzt die zweite Druckkammer 19 belüftet, so dass sich die Membran gemäß Fig. 2 ohne die bewegbare Druckplatte 15 auf den Schichtenstapel 11 absenkt. In dieser Phase kann nun Druck aufgebracht werden, wobei bedarfsweise zusätzlich in der zweiten Druckkammer 19 ein Druck oberhalb des Atmosphärendrucks aufgebracht werden kann.

Eine weitere Betriebsart ist das Membran- und Flachpressen in Kombination. Nachdem der Schichtenstapel 11 in die Arbeitskammer 14 eingebracht worden ist, werden Produktraum 20 sowie erste Druckkammer 18 und zweite Druckkammer 19 evakuiert. Anschließend wird durch Belüften der zweiten Druckkammer 19 die Membran 17 auf den Schichtenstapel 11 abgelegt. Dabei kann bedarfsweise ein Druck oberhalb des atmosphärischen Drucks als Überdruck in der zweiten Druckkammer 19 aufgebracht werden. Die bewegbare Druckplatte 15 bleibt währenddessen in ihrer oberen Stellung und hat keinen Kontakt zum Schichtenstapel 11. Dies entspricht der Darstellung gemäß Fig. 2. Im Folgenden wird durch Belüften der ersten Druckkammer 18 die bewegbare Druckplatte 15 auf die Membran 17 und den darunterliegenden Schichtenstapel 11 gelegt. Dabei muss der Druck in der ersten Druckkammer 18 höher sein als der Druck in der zweiten Druckkammer 19 bzw. muss die zweite Drucckammer 19 zuvor belüftet werden, um diesen Vorgang durchführen zu können. Um zu vermeiden, dass sich dabei ein Luftpolster in der zweiten Druckkammer 19 ausbildet, empfiehlt es sich jedoch, die zweite Druckkammer zu entlüften. Dies führt zu einer Darstellung gemäß Fig. 3, in der die Membran 17 als auch die bewegbare Druckplatte 15 auf den Schichtenstapel 11 abgesenkt sind.

Als weitere Betriebsart besteht die Möglichkeit eines Flach-und Membranpressens in Kombination. Nach Einbringen des Schichtenstapels 11 werden auch hier Produktraum 20 sowie die erste Druckkammer 18 und die zweite Druckkammer 19 evakuiert. Nun werden durch Belüften der ersten Druckkammer 18 die bewegbare Druckplatte 15 und die Membran 17 gemeinsam auf das Werkstück abgelegt, was der Darstellung gemäß Fig. 3 entspricht. In dieser Stellung wirkt nun zunächst der Flächendruck der bewegbaren Druckplatte aus der resultierenden Druckdifferenz zwischen dem Produktraum 20 und dem Belüftungsdruck in der ersten Druckkammer 18. Die Membran 17 selbst wirkt dabei noch nicht mit, da die zweite Druckkammer 19 noch evakuiert ist, so dass die Membran 17 zunächst nur als Polster wirkt. Durch Belüften der zweiten Druckkammer 19 kann nun ein Membrandruck wie beim Membranpressen ausgebaut werden. Durch Belüften der zweiten Druckkammer 18 wird die bewegbare Druckplatte 15 in Folge der Federsäule 27 als Rückstellmittel gemäß Fig. 1 nach oben bewegt bzw. kann mit Hilfe eines leichten Überdrucks unter Überwindung der Rückzugskräfte der Federsäule 27 auf die Membran 17 abgelegt werden. Dadurch kann im Falle einer beheizbaren Druckplatte 15 Wärme dem Werkstück weiter zugeführt werden. Grundsätzlich ist es auch möglich, bedarfsweise die bewegbare Druckplatte 15 mehrfach auf den Schichtenstapel 11 und die Membran 17 abzusenken und wieder anzuheben. Durch Belüften aller Druckkammern und des Produktraums 20 kann dann der Schichtenstapel 11 entnommen werden.

In sämtlichen Ausführungsbeispielen besteht grundsätzlich die Möglichkeit, nach dem Entlüften der ersten Druckkammer 18 und/oder der zweiten Druckkammer 19 der jeweils entlüfteten Druckkammer weiteren Druck zuzuführen, also einen Druck, der höher als Atmosphärendruck ist, um einen entsprechend gesteuerten Druck auf das Werkstück aufzubringen.

Ebenso ist es möglich, den Druck im Produktraum nicht, insbesondere nicht unter Atmosphärendruck abzusenken, was zu weiteren Alternativbetriebsarten führt.

Im Ergebnis werden damit ein Verfahren und eine Vorrichtung geschaffen, die eine Kombination einer Flachpressenstufe und einer Membranstufe in einer Einheit ermöglichen. Die Abtrennung der zweiten Druckkammer 19 erfolgt durch ein flexibles, gasdichtes Element, das vorzugsweise ein umlaufend eingespanntes gas- und druckdichtes Gewebetuch ist. Durch Verwendung dieses zusätzlichen flexiblen, gasdichten Elements ist ein Dreikammersystem möglich, das eine getrennte Ansteuerung von bewegbarer Druckplatte 15 und Membran 17 gestattet. Gleichwohl kann durch Entnahme der Membran das Dreikammersystem zu einem Zweikammersystem als Flachpresse mit einer Vakuumkammer umgerüstet werden. Damit sind unterschiedlichste Betriebsarten in einer Stufe wie z. B. Flachpressen / Membranpressen / Flach- und Membranpressen möglich. Dies gestattet die Herstellung unterschiedlicher Photovoltaikmodule in einer und derselben Presse.

Bei einer bevorzugten Ausführungsform, die insbesondere zum Laminieren von Smartglas oder Glaslaminaten z.B. mit PVB oder anderen Klebefolien vorgesehen ist, ergibt sich eine andere Betriebsweise der Vorrichtung.

Nach dem Einfördern des Schichtenstapels 11 schließt die Laminiervorrichtung und in der ersten Druckkammer 18 wird ein Druck aufgebaut, der größer als Atmosphärendruck ist. Die bewegbare Druckplatte 15 legt sich samt Membran 17 (sofern sie eingebaut ist) ab. Der Schichtenstapel 11 bekommt von beiden Seiten, d.h. im Ausführungsbeispiel von oben von der beheizbaren und bewegbaren Druckplatte 15 und von unten vom Unterteil 12 denselben Wärmeeintrag. Nach einer gewissen Zeit wird der Druck in der ersten Druckkammer 18 wieder abgebaut und die bewegbare Druckplatte 15 wird durch die elastischen Rückstellmittel, die zur Gewichtskompensation der bewegbaren Druckplatte 15 vorgesehen sind, wieder nach oben gezogen. Anschließend wird mit dem Evakuieren der ersten Druckkammer 18, ggf. der zweiten Druckkammer 19 und des Produktraums 20 begonnen. Dabei können die erste Druckkammer 18 und/oder die zweite Druckkammer 19 beliebig je nach Bedarf belüftet werden, auch abhängig davon, ob die Laminiervorrichtung als Membran- und/oder Flachpresse betrieben wird. In der ersten Druckkammer 18 und/oder zweiten Druckkammer 19 kann je nach Bedarf auch ein Überdruck aufgebracht werden.

Anders als in den vorausgegangenen Beschreibungen wird in diesem Anwendungsfall nicht mit Vakuum gestartet, sondern mit Druck zumindest in der ersten Druckkammer 18. Der Produktraum 20 kann, muss aber dazu nicht evakuiert werden.

### Bezugszeichenliste

- 10: Laminiervorrichtung
- 11: Schichtenstapel
- 11a: plattenförmiges Werkstück
- 11b: Adhäsivstoffschicht
- 12: Unterteil
- 13: Oberteil
- 14: Arbeitskammer
- 15: bewegbare Druckplatte
- 16: erstes flexibles, gasdichtes Element
- 17: Membran
- 18: erste Druckkammer
- 19: zweite Druckkammer
- 20: Produktraum
- 21: Dichtrahmen
- 22: Zwischenrahmen
- 23: Membranrahmen
- 24: oberer Kammerrahmen
- 25, 26: Spalt
- 27: Federsäule
- 28: Isolierung
- a-a: Pressachse

## Patentansprüche

1. Laminiervorrichtung (10) zum Laminieren wenigstens eines Schichtenstapels (11), der wenigstens ein im Wesentlichen plattenförmiges Werkstück (11a) und wenigstens eine zumindest auch als Adhäsivstoffschicht (11b) wirkende Schicht umfasst, mittels Druck und/oder Wärme,
wobei die Laminiervorrichtung aufweist:
- ein Unterteil (12),
- ein Oberteil (13), das mit dem Unterteil (12) gasdicht verbindbar ist,
- eine zwischen Unterteil (12) und Oberteil (13) ausgebildete, öffenbare und schließbare Arbeitskammer (14) zur Aufnahme des Schichtenstapels (11) beim Laminieren,
- eine innerhalb der Arbeitskammer (14) zwischen Oberteil (13) und Unterteil (12) entlang einer Pressachse (a-a) bewegbare Druckplatte (15),
- wenigstens einen zwischen Unterteil (12) und Oberteil (13) angeordneten Dichtrahmen (21),
- mehrere in der Arbeitskammer (14) angeordnete, voneinander separierbare, bedarfsweise betätigbare Druckkammern,
wobei mehrere in Richtung der Pressachse (a-a) voneinander beabstandet angeordnete Einspannstellen vorgesehen und dazu bestimmt und geeignet sind, wenigstens ein flexibles, gasdichtes Element an den Einspannstellen zur Abtrennung einer ersten Drucckammer (18) festlegbar anzuordnen, durch deren Beaufschlagung oder Nichtbeaufschlagung mit Druck oder Unterdruck die bewegbare Druckplatte (15) bewegbar ist, wobei das flexible, gasdichte Element die Arbeitskammer (14) in eine oberhalb des flexiblen, gasdichten Elements befindliche erste Druckkammer (18) und eine unterhalb des flexiblen, gasdichten Elements befindliche zweite Druckkammer (19) teilt, in der die bewegbare Druckplatte (15) angeordnet ist, wobei die Bewegung der bewegbaren Druckplatte (15) aufgrund einer Druckdifferenz zwischen den Druckkammern (18, 19) erfolgt,
**dadurch gekennzeichnet,**
**dass** wenigstens ein Zwischenrahmen (22) als vom Unterteil (12) und Oberteil (13) gesonderter Dichtrahmen (21) vorgesehen ist, wobei die Einspannstellen an oder zwischen diesen Elementen angeordnet sind, und
**dass** ein erstes flexibles, gasdichtes Element (16) in einen Spalt (25) oberhalb des Zwischenrahmens (22) eingespannt ist und ein weiteres flexibles Element in einen Spalt (26) unterhalb des Zwischenrahmens (22) als Membran (17) einspannbar ist zum Betrieb der Laminiervorrichtung mit als auch ohne Membran (17).

2. Laminiervorrichtung nach Anspruch 1, **dadurch gekennzeichnet, dass** das wenigstens eine flexible, gasdichte Element wenigstens eine Membran (17) ist.

3. Laminiervorrichtung nach Anspruch 1 oder 2, **dadurch gekennzeichnet, dass**, wenn ein weiteres flexibles, gasdichtes Element als Membran (17) eingespannt ist, die Membran (17) die Arbeitskammer (14) in eine oberhalb der Membran (17) befindliche zweite Druckkammer (19), in der die bewegbare Druckplatte (15) angeordnet ist, und einen unterhalb der Membran (17) befindlichen Produktraum (20) teilt, der bedarfsweise ebenfalls mit Druck oder Unterdruck beaufschlagbar ist.

4. Laminiervorrichtung nach einem der vorhergehenden Ansprüche, **dadurch gekennzeichnet, dass** zwischen Unterteil (12) und Oberteil (13) wenigstens drei durch zwei flexible, gasdichte Elemente voneinander getrennte Druckkammern (18, 19, 20) angeordnet sind.

5. Laminiervorrichtung nach einem der vorhergehenden Ansprüche, **dadurch gekennzeichnet, dass** die bewegbare Druckplatte (15) und die Membran (17) unabhängig voneinander aus den Druckkammern zur Anlage oder Nichtanlage am Unterteil (12) oder an einem Schichtenstapel (11) bewegbar sind.

6. Laminiervorrichtung nach einem der vorhergehenden Ansprüche, **dadurch gekennzeichnet, dass** der Dichtrahmen (21) mehrteilig ausgebildet ist und dass zwischen Unterteil (12) und Oberteil (13) als Teile des Dichtrahmens (21) vorzugsweise ein Membranrahmen (23), ein Zwischenrahmen (22) und ein oberer Kammerrahmen (24) angeordnet sind, zwischen welchen Teilen die Einspannstellen als Spalten (25, 26) angeordnet sind.

7. Laminiervorrichtung nach einem der vorhergehenden Ansprüche, **dadurch gekennzeichnet, dass** die bewegbare Druckplatte (15) über wenigstens ein vorzugsweise elastisches Rückstellmittel wie eine Federsäule (27) gewichtskompensiert am Oberteil (13) gelagert ist, das zugleich das bewegliche Oberteil einer Presse ist.

8. Verfahren zum Laminieren wenigstens eines Schichtenstapels (11), der wenigstens ein im Wesentlichen plattenförmiges Werkstück (11a) und wenigstens eine zumindest auch als Adhäsivstoffschicht (11b) wirkende Schicht umfasst, mittels Druck und/oder Wärme, insbesondere zum Laminieren zu einem Glaslaminat und/oder Photovoltaik-Modul,
wobei der wenigstens eine Schichtenstapel (11) in eine öffenbare und schließbare Arbeitskammer (14) eingebracht wird, die zwischen einem Unterteil (12) und einem Oberteil (13) einer Laminiervorrichtung (10) ausgebildet ist und die im geschlossenen Zustand beim Laminieren mittels eines zwischen Unterteil (12) und Oberteil (13) angeordneten Dichtrahmens (21) gasdicht verschließbar ist,
wobei eine bewegbare Druckplatte (15) innerhalb der Arbeitskammer (14) bedarfsweise zwischen Oberteil (13) und Unterteil (12) entlang einer Pressachse (a-a) der Laminiervorrichtung bewegbar ist,
wobei die Bewegung der in der Arbeitskammer (14) angeordneten Elemente der Laminiervorrichtung aus in der Arbeitskammer (14) angeordneten, betätigbaren Drucckammern durch deren Beaufschlagung oder Nichtbeaufschlagung mit Druck oder Unterdruck erfolgt,
wobei die bewegbare Druckplatte (15) aus einer ersten Druckkammer (18) durch deren Beaufschlagung oder Nichtbeaufschlagung mit Druck in der Arbeitskammer (14) bewegt wird, die durch wenigstens ein quer zur Pressachse (a-a) angeordnetes, flexibles, gasdichtes Element von der Arbeitskammer (14) abgetrennt wird, das an einer von mehreren in Richtung der Pressachse (a-a) voneinander beabstandeten Einspannstellen gehalten wird,
wobei die Arbeitskammer (14) durch das flexible, gasdichte Element in eine oberhalb des flexiblen, gasdichten Elements befindliche erste Druckkammer (18) und eine unterhalb des flexiblen, gasdichten Elements befindliche zweite Druckkammer (19) geteilt wird, in welcher die bewegbare Druckplatte (15) bewegt wird, wobei die Bewegung der Druckplatte (15) aufgrund einer Druckdifferenz zwischen den Druckkammern (18, 19) erfolgt,
**dadurch gekennzeichnet, dass** ein erstes flexibles, gasdichtes Element (16) in einen Spalt (25) oberhalb wenigstens eines einen vom Unterteil (12) und Oberteil (13) gesonderten Dichtrahmen (21) bildenden Zwischenrahmens (22) eingespannt wird und ein weiteres flexibles Element in einen Spalt (26) unterhalb des Zwischenrahmens (22) als Membran (17) einspannbar ist zum Betrieb der Laminiervorrichtung mit als auch ohne Membran (17).

9. Verfahren nach Anspruch 8, **dadurch gekennzeichnet, dass**, wenn als weiteres flexibles Element eine Membran (17) eingespannt wird, die Arbeitskammer (14) in eine oberhalb der Membran (17) befindliche zweite Druckkammer (19), in der die bewegbare Druckplatte (15) bewegt wird, und einen unterhalb der Membran (17) befindlichen Produktraum (20) geteilt wird, der bedarfsweise ebenfalls mit Druck beaufschlagt wird.

10. Verfahren nach Anspruch 9, **gekennzeichnet durch** die Schritte
- Einbringen eines Schichtenstapels (11) in die Arbeitskammer (14),
- gleichzeitiges Evakuieren der ersten Druckkammer (18), der zweiten Druckkammer (19) und des Produktraums (20),
- Belüften der ersten Druckkammer (18), wobei die bewegbare Druckplatte (15) mit der Membran (17) auf den Schichtenstapel (11) abgelegt wird,
- Aufbau von Druck auf den Schichtenstapel (11),
- Belüften der Druckkammern und des Produktraums zur Entnahme des laminierten Schichtenstapels (11).

11. Verfahren nach Anspruch 8, wobei keine Membran (17) vorhanden ist, **gekennzeichnet durch** die Schritte
- Einbringen eines Schichtenstapels (11) in die Arbeitskammer (14),
- Evakuieren der ersten Druckkammer (18) sowie des Produktraums (20),
- Belüften der ersten Druckkammer (18) und Ablegen der bewegbaren Druckplatte (15) auf dem Schichtenstapel (11),
- Aufbau von Druck auf den Schichtenstapel (11),
- Belüften des Produktraums (20) und Entnehmen des laminierten Schichtenstapels.

12. Verfahren nach Anspruch 9, **gekennzeichnet durch** die Schritte
- Einbringen eines Schichtenstapels in die Arbeitskammer (14),
- Evakuieren der ersten Druckkammer (18), der zweiten Druckkammer (19) und des Produktraums (20),
- Belüften der zweiten Druckkammer (19) und Ablegen der Membran (17), ohne dass die bewegbare Druckplatte (15) Kontakt mit der Membran (17) hat,
- Belüften der ersten Druckkammer (18) und des Produktraums und Entnehmen des laminierten Schichtenstapels (11).

13. Verfahren nach Anspruch 10, **gekennzeichnet durch** die Schritte
- Einbringen eines Schichtenstapels (11) in die Arbeitskammer (14),
- Evakuieren der ersten Druckkammer (18), der zweiten Druckkammer (19) und des Produktraums (20),
- Belüften der zweiten Druckkammer (19) und Ablegen der Membran (17) auf dem Schichtenstapel (11),
- Belüften der ersten Druckkammer (18) und Ablegen der bewegbaren Druckplatte (15) auf der Membran (17) und dem darunter liegenden Schichtenstapel (11), wobei der Druck in der ersten Druckkammer (18) größer als der Druck in der zweiten Drucckammer (19) ist,
- Belüften der Druckkammern und des Produktraums zur Entnahme des laminierten Schichtenstapels (11).

14. Verfahren nach Anspruch 10, **gekennzeichnet durch** die Schritte
- Einbringen eines Schichtenstapels (11) in die Arbeitskammer (14),
- Evakuieren der ersten Druckkammer (18), der zweiten Druckkammer (19) und des Produktraums (20),
- Belüften der ersten Druckkammer (18) und Ablegen der bewegbaren Druckplatte (15) und der Membran (17) gemeinsam auf dem Schichtenstapel (11),
- Belüften der zweiten Druckkammer (19) und Bewegen der bewegbaren Druckplatte weg von der Membran (17),
- bedarfsweise wenigstens ein weiteres Mal Absenken der bewegbaren Druckplatte (15) auf den Schichtenstapel (11) und die Membran (17) und anschließendes Anheben der bewegbaren Druckplatte (15),
- Belüften der Druckkammern und des Produktraums (20) zur Entnahme des Schichtenstapels (11).

15. Verfahren nach Anspruch 8 oder 9, **gekennzeichnet durch** die Schritte
- Einbringen eines Schichtenstapels (11) in die Arbeitskammer (14),
- Aufbringen eines Drucks, der größer als Atmosphärendruck ist, in der ersten Drucckammer (18),
- Ablegen der bewegbaren Druckplatte (15) und, falls vorhanden, der Membran (17), auf dem Schichtenstapel (11),
- Einbringen von Wärme, insbesondere derselben Wärmemenge, von der bewegbaren, bedarfsweise beheizbaren Druckplatte (15) und vom Unterteil (12) in den Schichtenstapel (11),
- Absenken des Drucks in der ersten Druckkammer (18) und Abheben der bewegbaren Druckplatte (15),
- Betreiben der Vorrichtung als Flach- und/oder Membranpresse,
- Entnehmen des laminierten Schichtenstapels (11).

16. Verfahren nach einem der Ansprüche 10 bis 15, **dadurch gekennzeichnet, dass** nach dem Entlüften der ersten Druckkammer (18) und/oder der zweiten Druckkammer (19) in der ersten Druckkammer (18) und/oder der zweiten Druckkammer (19) ein Druck aufgebaut wird, der höher als Atmosphärendruck ist.

17. Verfahren nach einem der Ansprüche 10 bis 16, **dadurch gekennzeichnet, dass** anstelle des Evakuierens des Produktraums der Druck im Produktraum (20) nicht, insbesondere nicht unter Atmosphärendruck abgesenkt wird.

## Claims

1. Laminating device (10) for laminating at least one layer stack (11), which comprises at least one substantially plate-like workpiece (11a) and at least one layer that is also effective as an adhesive layer (11b), by means of pressure and/or heat,
wherein the laminating device comprises:
- a lower part (12),
- an upper part (13) which is connectable in gas-tight manner to the lower part (12),
- an openable and closable working chamber (14) that is formed between the lower part (12) and the upper part (13) for receiving the layer stack (11) when laminating,
- a pressure plate (15) that is movable within the working chamber (14) between the upper part (13) and the lower part (12) along a pressing axis (a-a),
- at least one sealing frame (21) that is arranged between the lower part (12) and the upper part (13),
- a plurality of mutually separable pressure chambers that are operable as necessary and are arranged in the working chamber (14),
wherein a plurality of mutually spaced clamping positions arranged in the direction of the pressing axis (a-a) are provided and intended and suitable for fixably arranging at least one flexible gas-tight element at the clamping positions for separating off a first pressure chamber (18) and, by the application or non-application of pressure or negative pressure thereto, the movable pressure plate (15) is movable,
wherein the flexible gas-tight element divides the working chamber (14) into a first pressure chamber (18) that is located above the flexible gas-tight element and a second pressure chamber (19) that is located below the flexible gas-tight element and in which the movable pressure plate (15) is arranged, wherein the movement of the movable pressure plate (15) is effected due to a difference of pressure between the pressure chambers (18, 19),
**characterized in that**
at least one intermediate frame (22) is provided as a sealing frame (21) separate from the lower part (12) and the upper part (13), wherein the clamping positions are arranged at or between these elements, and **in that**
a first flexible gas-tight element (16) is clamped into a gap (25) above the intermediate frame (22) and a further flexible element serving as a membrane (17) is clampable into a gap (26) below the intermediate frame (22) for operating the laminating device with or without the membrane (17).

2. A laminating device in accordance with Claim 1, **characterized in that** the at least one flexible gas-tight element is at least one membrane (17).

3. A laminating device in accordance with Claim 1 or 2, **characterized in that**, when a further flexible gas-tight element serving as a membrane (17) is clamped in place, the membrane (17) divides the working chamber (14) into a second pressure chamber in which the movable pressure plate (15) is arranged that is located above the membrane (17) and a product space (20) that is located below the membrane (17) which is likewise subjectable to pressure or negative pressure as necessary.

4. A laminating device in accordance with one of the preceding Claims, **characterized in that** at least three pressure chambers (18, 19, 20) that are separated from each other by two flexible gas-tight elements are arranged between the lower part (12) and the upper part (13).

5. A laminating device in accordance with one of the preceding Claims, **characterized in that** the movable pressure plate (15) and the membrane (17) are movable independently of each other from the pressure chambers for contact or non-contact with the lower part (12) or a layer stack (11).

6. A laminating device in accordance with one of the preceding Claims, **characterized in that** the sealing frame (21) is formed in multiple parts and **in that** preferably a membrane frame (23), an intermediate frame (22) and an upper chamber frame (24) as parts of the sealing frame (21) are arranged between the lower part (12) and the upper part (13), between which parts the clamping positions in the form of gaps (25, 26) are arranged.

7. A laminating device in accordance with one of the preceding Claims, **characterized in that** the movable pressure plate (15) is mounted in weight-compensated manner on the upper part (13), which is the moveable upper part of a press at the same time, by at least one preferably resilient restoring means such as a spring column (27).

8. Method of laminating at least one layer stack (11) which comprises at least one substantially plate-like workpiece (11a) and at least one layer that is also effective as an adhesive layer (11b), by means of pressure and/or heat, in particular, for laminating to form a glass laminate and/or a photovoltaic module,
wherein the at least one layer stack (11) is introduced into an openable and closable working chamber (14) which is formed between a lower part (12) and an upper part (13) of a laminating device (10) and which, in the closed state when laminating, is closable in gas-tight manner by means of a sealing frame (21) that is arranged between the lower part (12) and the upper part (13),
wherein a movable pressure plate (15) is movable as necessary between the upper part (13) and the lower part (12) within the working chamber (14) along a pressing axis (a-a) of the laminating device,
wherein the movement of the elements of the laminating device arranged in the working chamber (14) out of operable pressure chambers that are arranged in the working chamber (14) is effected by the application or non-application of pressure or negative pressure thereto,
wherein the movable pressure plate (15) is moved from a first pressure chamber (18) by the application or non-application of pressure in the working chamber (14), which first pressure chamber is separated from the working chamber (14) by at least one flexible gas-tight element which is arranged transverse to the pressing axis (a-a) and is held at one of a plurality of clamping positions that are spaced from one another in the direction of the pressing axis (a-a),
wherein the working chamber (14) is divided by the flexible gas-tight element into a first pressure chamber (18) that is located above the flexible gas-tight element and a second pressure chamber (19) that is located below the flexible gas-tight element and in which the movable pressure plate (15) is moved, wherein the movement of the pressure plate (15) is effected due to a difference of pressure between the pressure chambers (18, 19),
**characterized in that** a first flexible gas-tight element (16) is clamped into a gap (25) above an intermediate frame (22) forming a part of the sealing frame (21) and a further flexible element in the form of a membrane (17) is clampable into a gap (26) below the intermediate frame (22) for operating the laminating device with or without the membrane (17).

9. A method in accordance with Claim 8, **characterized in that**, when a membrane (17) serving as a further flexible gas-tight element is clamped in place, the working chamber (14) is divided into a second pressure chamber (19) located above the membrane (17) and in which the movable pressure plate (15) is arranged and a product space (20) located below the membrane (17) and which is likewise subjected to pressure as necessary.

10. A method in accordance with Claim 9, **characterized by** the steps
- introducing a layer stack (11) into the working chamber (14),
- simultaneously evacuating the first pressure chamber (18), the second pressure chamber (19) and the product space (20),
- ventilating the first pressure chamber (18), whereby the movable pressure plate (15) with the membrane (17) is applied to the layer stack (11),
- building up pressure on the layer stack (11),
- ventilating the pressure chambers and the product space for the removal of the laminated layer stack (11).

11. A method in accordance with Claim 8, wherein no membrane (17) is present, **characterized by** the steps
- introducing a layer stack (11) into the working chamber (14),
- evacuating the first pressure chamber (18) and the product space (20),
- ventilating the first pressure chamber (18) and applying the movable pressure plate (15) to the layer stack (11),
- building up pressure on the layer stack (11),
- ventilating the product space (20) and removing the laminated layer stack.

12. A method in accordance with Claim 9, **characterized by** the steps
- introducing a layer stack into the working chamber (14),
- evacuating the first pressure chamber (18), the second pressure chamber (19) and the product space (20),
- ventilating the second pressure chamber (19) and applying the membrane (17) without the movable pressure plate (15) coming into contact with the membrane (17),
- ventilating the first pressure chamber (18) and the product space and removing the laminated layer stack (11).

13. A method in accordance with Claim 10 **characterized by** the steps
- introducing a layer stack (11) into the working chamber (14),
- evacuating the first pressure chamber (18), the second pressure chamber (19) and the product space (20),
- ventilating the second pressure chamber (19) and applying the membrane (17) on the layer stack (11),
- ventilating the first pressure chamber (18) and applying the movable pressure plate (15) to the membrane (17) and the layer stack (11) located therebelow, wherein the pressure in the first pressure chamber (18) is greater than the pressure in the second pressure chamber (19),
- ventilating the pressure chambers and the product space for the removal of the laminated layer stack (11).

14. A method in accordance with Claim 10, **characterized by** the steps
- introducing a layer stack (11) into the working chamber (14),
- evacuating the first pressure chamber (18), the second pressure chamber (19) and the product space (20),
- ventilating the first pressure chamber (18) and applying the movable pressure plate (15) and the membrane (17) together to the layer stack (11),
- ventilating the second pressure chamber (19) and moving the movable pressure plate away from the membrane (17),
- as necessary, lowering the movable pressure plate (15) on the layer stack (11) and the membrane (17) and subsequently raising the movable pressure plate (15) at least one more time,
- ventilating the pressure chambers and the product space (20) for the removal of the layer stack (11).

15. A method in accordance with Claim 8 or 9, **characterized by** the steps
- introducing a layer stack (11) into the working chamber (14),
- applying a pressure which is greater than atmospheric pressure to the first pressure chamber (18),
- applying the movable pressure plate (15) and, if present, the membrane (17), to the layer stack (11),
- introducing heat, in particular, the same amount of heat into the layer stack (11) from the movable pressure plate (15) that is heatable as necessary and from the lower part (12),
- lowering the pressure in the first pressure chamber (18) and lifting the movable pressure plate (15),
- operating the device as a flat and/or membrane press,
- removing the laminated layer stack (11).

16. A method in accordance with one of the Claims 10 to 15, **characterized in that**, after the ventilation of the first pressure chamber (18) and/or the second pressure chamber (19), a pressure which is higher than atmospheric pressure is built up in the first pressure chamber (18) and/or the second pressure chamber (19).

17. A method in accordance with any of the Claims10 to 16, **characterized in that** instead of evacuating the product space the pressure in the product space (20) is not lowered, in particular, not below atmospheric pressure.

## Revendications

1. Dispositif de laminage (10) pour laminer au moins un empilement de couches (11) qui comprend au moins une pièce à usiner (11a) essentiellement plane et au moins une couche faisant également au moins office de couche d'adhésif (11b), au moyen de pression et/ou de chaleur,
ce dispositif de laminage comportant :
- une pièce inférieure (12),
- une pièce supérieure (13), qui peut être reliée de manière étanche aux gaz à la pièce inférieure (12),
- une chambre de travail (14) qui peut être ouverte et fermée pour la réception de l'empilement de couches (11) lors du laminage, formée entre la pièce inférieure (12) et la pièce supérieure (13),
- une plaque de pression (15) déplaçable à l'intérieur de la chambre de travail (14) entre la pièce supérieure (13) et la pièce inférieure (12) le long d'un axe de presse (a-a),
- au moins un cadre d'étanchéité (21) disposé entre la pièce inférieure (12) et la pièce supérieure (13),
- plusieurs chambres de pression disposées dans la chambre de travail (14), séparables les unes des autres et actionnables si nécessaire,
dans lequel plusieurs zones de serrage sont prévues dans la direction de l'axe de presse (a-a), espacées les unes des autres et destinées et appropriées pour disposer, d'une manière déterminable, au moins un élément flexible étanche aux gaz dans les zones de serrage pour séparer une première chambre de pression (18) grâce à l'alimentation ou la non-alimentation en pression de laquelle la plaque de pression (15) est déplaçable, dans lequel l'élément flexible, étanche aux gaz divise la chambre de travail (14) en une première chambre de pression (18) située au-dessus de l'élément flexible, étanche aux gaz et une deuxième chambre de pression (19) située en dessous de l'élément flexible, étanche aux gaz, dans laquelle le plaque de pression déplaçable (15) est disposée, le déplacement de la plaque de pression (15) déplaçable se produisant en raison de la différence de pression entre les chambres de pression (18, 19),
**caractérisé en ce que**
au moins un cadre intermédiaire (22) est prévu comme cadre d'étanchéité (21) séparé de la pièce inférieure (12) et de la pièce supérieure (13), les zones de serrages étant disposées dans ou entre ces éléments, et
**en ce qu'**un premier élément flexible, étanche aux gaz (16) est serré dans un intervalle (25) au-dessus du cadre intermédiaire (22) et un autre élément flexible peut être serré dans un intervalle (26) en dessous du cadre intermédiaire (22) en tant que membrane (17) pour le fonctionnement du dispositif de laminage avec ou sans membrane (17).

2. Dispositif de laminage selon la revendication 1, **caractérisé en ce que** le ou les élément(s) flexible(s), étanche(s) aux gaz est/sont au moins une membrane (17).

3. Dispositif de laminage selon la revendication 1 ou 2, **caractérisé en ce que** lorsqu'un autre élément flexible, étanche aux gaz (17) est serré en tant que membrane (17), la membrane (17) divise la chambre de travail (14) en une deuxième chambre de pression (19) située au-dessus de la membrane (17), dans laquelle la plaque de pression déplaçable (15) est disposée, et un espace produit (20) situé en dessous de la membrane (17), lequel espace produit peut si nécessaire être mis sous pression ou en dépression.

4. Dispositif de laminage selon l'une des revendications précédentes, **caractérisé en ce qu'**entre la pièce inférieure (12) et la pièce supérieure (13) sont disposées trois chambres de pression (18, 19, 20) séparées les unes des autres par deux éléments flexibles étanches aux gaz.

5. Dispositif de laminage selon l'une des revendications précédentes, **caractérisé en ce que** la plaque de pression déplaçable (15) et la membrane (17) sont déplaçables indépendamment l'une de l'autre hors des chambres de pression pour l'installation ou la non-installation sur la pièce inférieure (12) ou sur un empilement de couches (11).

6. Dispositif de laminage selon l'une des revendications précédentes, **caractérisé en ce que** la cadre d'étanchéité (21) est réalisé en plusieurs parties, et **en ce qu'**entre la pièce inférieure (12) et la pièce supérieure (13) sont disposées en tant que parties du cadre d'étanchéité (21) de préférence un cadre formant membrane (23), un cadre intermédiaire (22) et un cadre supérieur formant chambre (24), entre lesquelles parties les zones de serrage sont disposées en tant qu'intervalles (25, 26).

7. Dispositif de laminage selon l'une des revendications précédentes, **caractérisé en ce que** la plaque de pression déplaçable (15) est fixée au moyen d'au moins un moyen de rappel de préférence élastique tel qu'un ressort cylindrique (27), de manière compensée en poids sur la pièce supérieure (13), laquelle est en même temps la pièce supérieure déplaçable d'une presse.

8. Procédé de laminage d'au moins un empilement de couches (11), lequel comprend au moins une pièce à usiner essentiellement plane (11a) et au moins une couche faisant office également au moins de couche adhésive (11a), au moyen de pression et/ou de chaleur, en particulier pour le laminage d'un verre stratifié et/ou d'un module photovoltaïque,
dans lequel au moins un empilement de couches (11) est introduit dans une chambre de travail (14) qui peut être ouverte et fermée et qui est réalisée entre une pièce inférieure (12) et une pièce supérieure (13) d'un dispositif de laminage (10) et qui, à l'état fermé lors du laminage, peut être fermée de manière étanche aux gaz au moyen d'un cadre d'étanchéité disposé entre la pièce inférieure (12) et la pièce supérieure (13),
dans lequel une plaque de pression déplaçable (15) peut être déplacée à l'intérieur de la chambre de travail (14) si nécessaire entre la pièce supérieure (13) et la pièce inférieure (12) le long d'un axe de presse (a-a) du dispositif de laminage,
dans lequel le déplacement des éléments du dispositif de laminage disposés dans la chambre de travail (14) se produit à partir de chambres de pression actionnables, disposées dans la chambre de travail (14) grâce à leur alimentation ou non-alimentation en pression ou en dépression,
dans lequel la plaque de pression (15) déplaçable est déplacée hors d'une première chambre de pression (18) grâce à son alimentation ou non-alimentation en pression dans la chambre de travail (14), qui est séparée de la chambre de travail (14) par au moins un élément flexible, étanche au gaz, disposé perpendiculairement à l'axe de presse (a-a), lequel est maintenu dans une zone de serrage parmi plusieurs zones de serrages espacées les unes des autres dans la direction de l'axe de presse (a-a),
dans lequel la chambre de travail (14) est divisée par l'élément flexible, étanche aux gaz en une première chambre de pression (18) située au-dessus de l'élément flexible, étanche au gaz, et une deuxième chambre de pression (19) située en dessous de l'élément flexible, étanche aux gaz, dans laquelle la plaque de pression (15) est déplacée, le déplacement de la plaque de pression (15) se produisant en raison d'une différence de pression entre les chambres de pression (18, 19),
**caractérisé en ce qu'**un premier élément flexible, étanche aux gaz (16) est serré dans un intervalle (25) au-dessus d'au moins un cadre intermédiaire (22) formant un cadre d'étanchéité séparé de la pièce inférieure (12) et de la pièce supérieure (13), et un autre élément flexible peut être serré dans un intervalle (26) en dessous du cadre intermédiaire (22) en tant que membrane (17) pour le fonctionnement du dispositif de laminage avec ou sans membrane (17).

9. Procédé selon la revendication 8, **caractérisé en ce que** lorsqu'une membrane (17) est serrée en tant qu'autre élément flexible, la chambre de travail (14) est divisée en une deuxième chambre de pression (19) située au-dessus de la membrane (17), dans laquelle la plaque de pression (15) est déplacée, et un espace produit (20) situé en dessous de la membrane (17), qui peut si nécessaire être alimenté en pression.

10. Procédé selon la revendication 9, **caractérisé par** les étapes
- d'introduction d'un empilement de couches (11) dans la chambre de travail (14),
- de mise sous vide simultanée de la première chambre de pression (18), de la deuxième chambre de pression (19) et de l'espace de produit (20),
- de mise sous pression de la première chambre de pression (18), la plaque de pression déplaçable (15) étant mise avec la membrane (17) sur l'empilement de couches (11),
- d'application de la pression sur l'empilement de couches (11),
- de mise sous pression des chambres de pression et de l'espace produit pour le retrait de l'empilement de couches laminé (11).

11. Procédé selon la revendication 8, dans lequel aucune membrane (17) n'est présente, **caractérisé par** les étapes :
- d'introduction d'un empilement de couches (11) dans la chambre de travail (14),
- de mise sous vide de la première chambre de pression (18) ainsi que de l'espace produit (20),
- de mise sous pression de la première chambre de pression (18) et de mise de la plaque de pression (15) déplaçable sur l'empilement de couches (11),
- d'application de pression sur l'empilement de couches (11),
- de mise sous pression de l'espace produit (20) et de retrait de l'empilement de couches laminé.

12. Procédé selon la revendication 9, **caractérisé par** les étapes
- d'introduction d'un empilement de couches dans la chambre de travail (14),
- de mise sous vide de la première chambre de pression (18), de la deuxième chambre de pression (19) et de l'espace produit (20),
- de mise sous pression de la deuxième chambre de pression (19) et de mise en place de la membrane (17), sans que la plaque de pression déplaçable (15) soit en contact avec la membrane (17),
- de mise sous pression de la première chambre de pression (18) et de l'espace produit et de retrait de l'empilement de couches laminé (11).

13. Procédé selon la revendication 10, **caractérisé par** les étapes
- d'introduction d'un empilement de couches (11) dans la chambre de travail (14),
- de mise sous vide de la première chambre de pression (18), de la deuxième chambre de pression (19) et de l'espace produit (20),
- de mise sous pression de la deuxième chambre de pression (19) et de mise de la membrane (17) sur l'empilement de couches (11),
- de mise sous pression de première chambre de pression (18) et de mise de la plaque de pression déplaçable (15) sur la membrane (17) et l'empilement de couches (11) située en dessous, la pression dans la première chambre de pression (18) étant supérieure à la pression dans la deuxième chambre de pression (19),
- de mise sous pression des chambres de pression et de l'espace produit en vue du retrait de l'empilement de couches laminé.

14. Procédé selon la revendication 10, **caractérisé par** les étapes
- d'introduction d'un empilement de couches (11) dans la chambre de travail (14),
- de mise sous vide de la première chambre de pression (18), de la deuxième chambre de pression (19) et de l'espace produit (20),
- de mise sous pression de la première chambre de pression (18) et de mise de la plaque de pression déplaçable (15) et de la membrane (17) ensemble sur l'empilement de couches (11),
- de mise sous pression de la deuxième chambre de pression (19) et d'éloignement de la plaque de pression déplaçable de la membrane (17),
- si nécessaire, d'abaissement au moins une fois de plus, de la plaque de pression déplaçable (15) sur l'empilement de couches (11) et la membrane (17) et de soulèvement immédiat de la plaque de pression déplaçable (15),
- de mise sous pression des chambres de pression et de l'espace produit (20) en vue du retrait de l'empilement de couches (11).

15. Procédé selon la revendication 8 ou 9, **caractérisé par** les étapes
- d'introduction d'un empilement de couches (11) dans la chambre de travail (14),
- d'application d'une pression, qui est supérieure à la pression atmosphérique, dans la première chambre de pression (18),
- de mise de la plaque de pression (15) et, le cas échéant, de la membrane (17), sur l'empilement de couches (11),
- d'application de chaleur, en particulier de la même quantité de chaleur, de la plaque de pression (15) chauffable si nécessaire et de la pièce inférieure (12) à l'empilement de couches (11),
- d'abaissement de la pression dans la première chambre de pression (18) et d'enlèvement de la plaque de pression déplaçable (15),
- d'utilisation du dispositif en tant que presse plane et/ou à membrane,
- de retrait de l'empilement de couches laminé (11).

16. Procédé selon l'une des revendications 10 à 15, **caractérisé en ce qu'**après la suppression de la pression dans la première chambre de pression (18) et/ou dans la deuxième chambre de pression (19), une pression supérieure à la pression atmosphérique est appliquée dans la première chambre de pression (18) et/ou la deuxième chambre de pression (19).

17. Procédé selon l'une des revendications 10 à 16, **caractérisé en ce qu'**au lieu de la mise sous vide de l'espace produit, la pression dans l'espace produit (20) n'est pas abaissée, en particulier pas sous la pression atmosphérique.
